(19) Europäisches Patentamt European Patent Office Office européen des brevets

(11) **EP 4 287 442 A1**

(12) **EUROPEAN PATENT APPLICATION**
published in accordance with Art. 153(4) EPC

(43) Date of publication:
06.12.2023 Bulletin 2023/49

(21) Application number: 21922922.6

(22) Date of filing: 29.01.2021

(51) International Patent Classification (IPC):
*H02J 7/00* (2006.01)    *H02J 3/00* (2006.01)
*H02J 3/38* (2006.01)

(52) Cooperative Patent Classification (CPC):
**H02J 3/00; H02J 3/38; H02J 7/00;** Y02T 10/70;
Y04S 30/14

(86) International application number:
**PCT/JP2021/003385**

(87) International publication number:
**WO 2022/162907 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **ITAYA, Nobuhiko
Tokyo 100-8310 (JP)**

(74) Representative: **Witte, Weller & Partner
Patentanwälte mbB
Postfach 10 54 62
70047 Stuttgart (DE)**

(54) **CHARGE/DISCHARGE PLAN CREATING DEVICE, COMMAND DEVICE, POWER SYSTEM MANAGEMENT SYSTEM, TERMINAL DEVICE, POWER STORAGE SYSTEM, CHARGE/DISCHARGE SYSTEM, POWER STORAGE CELL, ELECTRIC VEHICLE, CHARGE/DISCHARGE PLAN CREATING METHOD, AND CHARGE/DISCHARGE PLAN CREATING PROGRAM**

(57)    A charge/discharge plan creation device (7) according to the present disclosure includes: a constraint condition determination unit (73) that determines a constraint condition related to an amount of control of charge/discharge of a plurality of storage batteries connected to a power grid for securing quality of the power grid by using a prediction value of an amount of charge/discharge of the plurality of storage batteries computed based on an actual value of charge/discharge of the plurality of storage batteries; and a plan value computation unit (74) that computes a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

FIG.2

**Description**

Field

The present disclosure relates to a charge/discharge plan creation device, a command device, a power grid management system, a terminal device, a power storage system, a charge/discharge system, a storage battery, an electric vehicle, a charge/discharge plan creation method, and a charge/discharge plan creation program for creating a charge/discharge plan for storage batteries.

Background

In recent years, there is an increasing expectation that consumers' storage batteries such as storage batteries installed as consumer facilities and storage batteries mounted on electric vehicles (EVs) can be used for securing the quality of power grids. Patent Literature 1 discloses a technique for controlling the charge/discharge of the storage battery of each consumer based on a request for power adjustment from a higher-level control system, that is, a request for securing the quality of the power grid. In order to more reliably secure the requested amount requested for securing the quality of the power grid, the technique described in Patent Literature 1 involves computing the achievement rate of charge/discharge commands in each consumer using past charge/discharge commands and actual values of charge/discharge, determining the reserve power according to the achievement rate, and in cases where the requested amount can be procured without using the reserve power, generating a charge/discharge command for each consumer without using the reserve power.

Citation List

Patent Literature

Patent Literature 1: Japanese Patent Application Laid-open No. 2020-89087

Summary

Technical Problem

On the other hand, in order to control consumers' storage batteries in response to a request from the power grid, it is required that the remaining power of the storage batteries be appropriately secured at the time of receiving a charge/discharge command. For example, if the remaining power of the storage batteries has reached the maximum value by the time of receiving a charge command, the storage batteries cannot be charged. For this reason, with the technique described in Patent Literature 1, in cases where the amount of charge requested for securing the quality of the power grid exceeds the total chargeable amount of consumers' storage batteries despite the use of the reserve power, the requested amount for securing the quality of the power grid cannot be secured.

Therefore, consumers need to keep the remaining power of their storage batteries at an appropriate value so as to be able to follow the charge/discharge command in a time slot defined in a contract or the like as a time slot in which control based on the charge/discharge command from the power grid is performed. That is, consumers need to secure the chargeable/dischargeable amount of their storage batteries. The appropriate value of the remaining power is not constant but varies depending on the state of each device connected to the power grid. Therefore, the chargeable/dischargeable amount is set with a margin; for example, the chargeable/dischargeable amount is secured so as to be able to cope with the maximum possible amount of charge/discharge command in both charge and discharge. For this reason, even in a time slot in which consumers should be allowed to use more charge for themselves, the amount of charge has to be reduced in preparation for the request of the power grid, restricting the usability of storage batteries for the consumers having the storage batteries.

The present disclosure has been made in view of the above, and an object thereof is to obtain a charge/discharge plan creation device that enables storage batteries to be used for securing the quality of a power grid while preventing deterioration of usability of storage batteries for consumers.

Solution to Problem

In order to solve the above-described problems and achieve the object, a charge/discharge plan creation device according to the present disclosure includes a constraint condition determination unit that determines a constraint condition related to an amount of control of charge/discharge of a plurality of storage batteries connected to a power grid for securing quality of the power grid by using a prediction value of an amount of charge/discharge of the plurality of storage batteries computed based on an actual value of charge/discharge of the plurality of storage batteries. The charge/discharge plan creation device further includes a plan value computation unit that computes a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

Advantageous Effects of Invention

The charge/discharge plan creation device according to the present disclosure can achieve the effect of enabling storage batteries to be used for securing the quality of a power grid while preventing deterioration of usability of storage batteries for consumers.

Brief Description of Drawings

FIG. 1 is a diagram illustrating an exemplary configuration of a charge/discharge system according to an embodiment.
FIG. 2 is a diagram illustrating an exemplary configuration of each device constituting a power grid management system.
FIG. 3 is a flowchart illustrating an exemplary procedure in the power grid management system.
FIG. 4 is a flowchart illustrating an exemplary procedure for prediction processing.
FIG. 5 is a flowchart illustrating an exemplary procedure for determining constraint conditions for securing power grid quality.
FIG. 6 is a flowchart illustrating an exemplary procedure for computing the amount of control of charge/discharge.
FIG. 7 is a flowchart illustrating an exemplary procedure for controlling the storage batteries of consumers in the command device.
FIG. 8 is a diagram schematically illustrating the distribution of prediction errors of the controllable amount.
FIG. 9 is a diagram schematically illustrating an exemplary control cycle.
FIG. 10 is a diagram for explaining the effects of the embodiment.
FIG. 11 is a diagram illustrating an exemplary configuration of a computer system that implements each device constituting the power grid management system.

Description of Embodiments

Hereinafter, a charge/discharge plan creation device, a command device, a power grid management system, a terminal device, a power storage system, a charge/discharge system, a storage battery, an electric vehicle, a charge/discharge plan creation method, and a charge/discharge plan creation program according to embodiments will be described in detail with reference to the drawings.

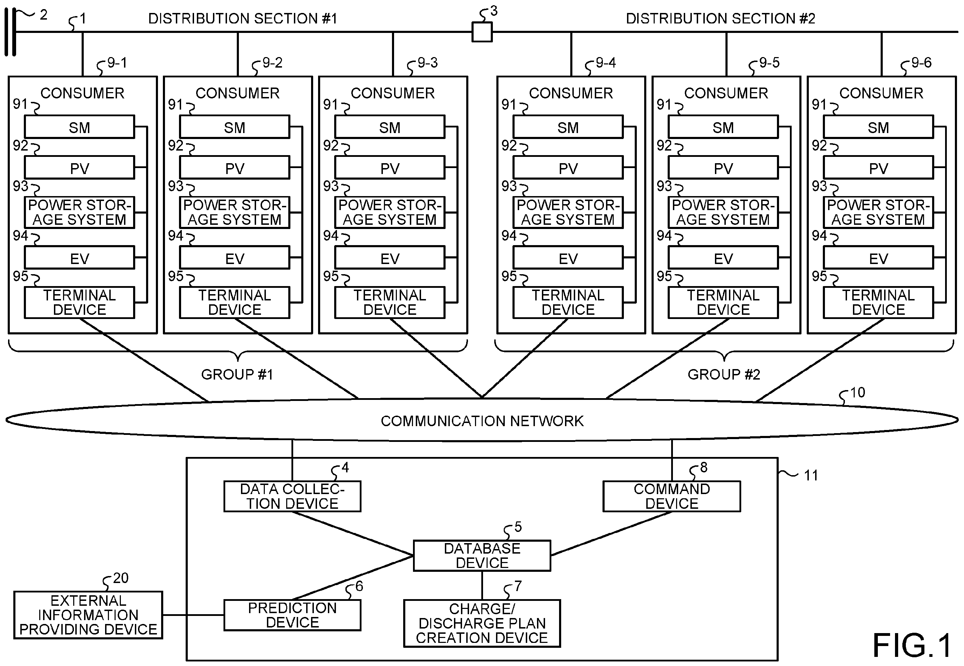

FIG. 1 is a diagram illustrating an exemplary configuration of a charge/discharge system according to an embodiment. The charge/discharge system according to the present embodiment includes a terminal device 95 installed in each of consumers 9-1 to 9-6, and a power grid management system 11 that collects, from the terminal devices 95, various types of power-related information including actual values of charge/discharge of the storage batteries of the consumers 9-1 to 9-6, and controls the storage batteries of the consumers 9-1 to 9-6 using the collected information. A distribution line 1 is connected to a distribution transformer 2 and supplies power to the facilities of the consumers 9-1 to 9-6. In the present embodiment, the power grid management system 11 uses the actual values collected from the terminal devices 95 to generate plan values of the amount of charge so as to reduce the variation of the remaining power of the storage batteries of the consumers 9-1 to 9-6 in each time section within a certain period. Therefore, it is possible to create a charge/discharge plan that reflects the usage status of the storage batteries of the consumers 9 and reduces the influence on the remaining power of the storage battery of each of the consumers 9-1 to 9-6, and thus, it is not necessary to preliminarily place a fixed constraint on the remaining power of the storage battery of each of the consumers 9-1 to 9-6. As such, storage batteries can be used for securing the quality of the power grid while preventing deterioration of usability of storage batteries for consumers.

The power grid management system 11 includes a data collection device 4, a database device 5, a prediction device 6, a charge/discharge plan creation device 7, and a command device 8. The data collection device 4 collects various types of power-related information of the consumers 9-1 to 9-6 from the terminal devices 95 installed in the consumers 9-1 to 9-6, and transmits the information to the database device 5. The database device 5 stores information received from the data collection device 4 and information received from the prediction device 6, the charge/discharge plan creation device 7, and the command device 8. The prediction device 6 predicts power consumption in the consumers 9-1 to 9-6, the amount of charge/discharge of the storage batteries of the consumers 9-1 to 9-6, and the like using information stored in the database device 5 and information provided from an external information providing device 20, and transmits the prediction results to the database device 5. The external information providing device 20 is, for example, a device that provides weather information including actual values and forecast values of temperature and solar radiation intensity.

The charge/discharge plan creation device 7 computes plan values of the amount of charge/discharge of the storage batteries of the consumers 9-1 to 9-6 using the information acquired from the database device 5, and transmits the computed results to the database device 5. The command device 8 generates a charge/discharge command for the storage battery of each of the consumers 9-1 to 9-6 using the information acquired from the database device 5, and transmits the charge/discharge command to the terminal device 95 of each of the consumers 9-1 to 9-6. The charge/discharge plan creation device 7, the command device 8, and the storage batteries of the consumers 9-1 to 9-6 for which charge/discharge plans are created constitute the charge/discharge system. Each device constituting the power grid management system 11 will be described in detail later.

As illustrated in FIG. 1, each of the consumers 9-1 to 9-6 manages a range equipped with a smart meter (abbreviated as SM in FIG. 1) 91 as a metering device, a photovoltaic facility (abbreviated as PV in FIG. 1) 92, a power storage system 93, an EV charge/discharge device (abbreviated as EV in FIG. 1) 94, and the terminal device 95. Note that the consumers 9-1 to 9-6 are contractors who have a contract to use power with an electric power company or the like, and also consumers who have a contract to charge and discharge their storage batteries in conformity with a request from the power grid. FIG. 1 indicates that the devices depicted in the rectangles shown as the consumers 9-1 to 9-6 are devices installed within the range managed by each of the consumers 9-1 to 9-6 or corresponding to the range. The range managed by each of the consumers 9-1 to 9-6 is, for example, a general home, a business establishment, a factory, a hospital, a commercial facility, a charging station, or the like. The distribution line 1 is a distribution line of high voltage, e.g. 6600 V. The consumers 9-1 to 9-6 may be low-voltage consumers to which low-voltage power of, for example, 100 V or 200 V is supplied via pole-mounted transformers (not illustrated) connected to the distribution line 1, or may be high-voltage consumers to which high-voltage power is supplied from the distribution line 1. Hereinafter, an example will be described in which the consumers 9-1 to 9-6 include both high-voltage consumers and low-voltage consumers, but the consumers 9-1 to 9-6 may include only high-voltage consumers or only low-voltage consumers.

In the example illustrated in FIG. 1, each of the consumers 9-1 to 9-6 has the photovoltaic facility 92, the power storage system 93, and the EV charge/discharge device 94, and these facilities are connected to the distribution line 1, although not depicted in FIG. 1 for simplification of the drawing. That is, the photovoltaic facility 92, the power storage system 93, and the EV charge/discharge device 94 are connected to the power grid. In FIG. 1, all of the consumers 9-1 to 9-6 have the photovoltaic facility 92, the power storage system 93, and the EV charge/discharge device 94, but each of the consumers 9-1 to 9-6 only needs to have the power storage system 93 and/or the EV charge/discharge device 94. Each of the consumers 9-1 to 9-6 also has a load (not illustrated), that is, a facility that consumes power, and the load is also connected to the distribution line 1. The power storage system 93 is, for example, a stationary power storage system installed in the consumers 9-1 to 9-6. The consumers 9-1 to 9-6 are examples of consumers having a storage battery, and the storage battery may be a storage battery in the power storage system 93 or a storage battery mounted on an EV that is charged and discharged by the EV charge/discharge device 94. That is, the storage battery of the power storage system 93 and the storage battery mounted on the EV that is charged and discharged by the EV charge/discharge device 94 are an example of a plurality of storage batteries connected to the power grid, and specifically, are an example of storage batteries that are used by the corresponding consumers 9-1 to 9-6. The storage battery of the power storage system 93 and the storage battery mounted on the EV that is charged and discharged by the EV charge/discharge device 94 are examples of storage batteries that are charged and discharged based on a control command transmitted from the power grid management system 11.

Hereinafter, the consumers 9-1 to 9-6 can be collectively referred to as the consumer(s) 9. Although FIG. 1 illustrates the facilities of the consumers 9 that charge and discharge their storage batteries in conformity with a request from the power grid, in general, the distribution line 1 is also connected to facilities of consumers other than the consumers 9, such as consumers who do not own a storage battery. In addition, although FIG. 1 illustrates each facility of the six consumers 9, the number of consumers 9 is not limited to the example illustrated in FIG. 1. In addition, although FIG. 1 illustrates one distribution line 1, the power grid managed by the power grid management system 11 is not limited to the distribution line 1, and the power grid managed by the power grid management system 11 may include a plurality of distribution lines.

The photovoltaic facility 92 includes a photovoltaic panel and a power conditioning system (PCS, or power conditioner) that converts DC power generated by the photovoltaic panel into AC power. The power storage system 93 includes a storage battery and a storage battery PCS which is a charge/discharge device that charges and discharges the storage battery. Note that the storage battery of the power storage system 93 is connected to the distribution line 1 of the power grid via the storage battery PCS. In this manner, a storage battery connected to the power grid via a device that performs charging and discharging is also referred to as a storage battery connected to the power grid. The storage battery PCS is an example of a charge/discharge device that charges and discharges a storage battery based on a control command for charge/discharge transmitted from the command device 8. For example, the power generated by the photovoltaic facility 92 of the consumer 9 in the daytime is consumed by the load of the consumer 9 or stored in the storage battery in the power storage system 93, and the power stored in the power storage system 93 is consumed by the load of the consumer 9 at night. In addition, the power storage system 93 may be used to keep the peak of power to no more than the value requested by the electric power company. Thus, the consumers 9 install the power storage system 93 for various purposes, but the present embodiment places no restriction on the purpose of installing the power storage system 93 for each consumer 9, and the power storage system 93 may be installed for any purpose.

The EV charge/discharge device 94 controls the charge/discharge of the storage battery mounted on the EV. The EV charge/discharge device 94 is an example of a charge/discharge device that charges and discharges a storage battery based on a control command for charge/discharge transmitted from the command device 8. When the EV is connected to the EV charge/discharge device 94 and a charging instruction is given from a user, the EV charge/discharge device 94 charges the storage battery mounted on the EV using the power supplied from the distribution line 1, that is, the power grid. In addition, the EV charge/discharge device 94 discharges the storage battery mounted on the EV when the EV is connected to the EV charge/discharge device 94 and a discharging instruction is given from the user. Note that the EV charge/discharge device 94 may be capable of charging the storage battery of the EV using the power supplied from the power storage system 93 or the photovoltaic facility 92. In addition, two or more of the PCS in the photovoltaic facility 92, the storage battery PCS in the power storage system 93, and the EV charge/discharge device 94 may be integrated.

The smart meter 91 measures the amount of received power for automatic meter reading of power. The smart meter 91 transmits the amount of received power to, for example, a central device that manages automatic meter reading (not illustrated). In addition, the smart meter 91 transmits the amount of received power to the terminal device 95. The smart meter 91 may transmit the amount of received power to the terminal device 95 every time a data acquisition request is received from the terminal device 95, or may spontaneously transmit the amount of received power to the terminal device 95 at intervals specified by the power grid management system 11 via the terminal device 95. The amount of received power measured by the smart meter 91 is generally a value obtained by subtracting the amount of power supplied from the power supply source in the consumer 9 from the amount of power consumed by the load of the consumer 9. The amount of power supplied from the power supply source in the consumer 9 is the amount of power supplied by means of power generation in the photovoltaic facility 92 of the consumer 9, discharge of the power storage system 93, discharge of the storage battery of the EV, and the like.

The terminal device 95 acquires power-related information from the smart meter 91, the photovoltaic facility 92, the power storage system 93, and the EV charge/discharge device 94, and transmits the acquired information to the data collection device 4 of the power grid management system 11 via a communication network 10. The terminal device 95 also receives a command from the command device 8 of the power grid management system 11 via the communication network 10, and then transmits the received command to the corresponding device. For example, if the received command is a command instructing the power storage system 93 to perform charging or discharging, the terminal device 95 transmits the command to the power storage system 93. If the command is a command instructing the EV charge/discharge device 94 to perform charging or discharging, the terminal device 95 transmits the command to the EV charge/discharge device 94. Upon receiving the command from the command device 8 via the terminal device 95, the power storage system 93 and the EV charge/discharge device 94 perform charging or discharging based on the received command. Note that the power storage system 93 and the EV charge/discharge device 94 may perform charging or discharging before receiving a command from the command device 8, in which case the amount of charge/discharge is changed using the received command. The communication network 10 is exemplified by but not limited to the Internet, and may be any communication network.

Specifically, the terminal device 95 acquires the actual value of the amount of received power from the smart meter 91, acquires the actual value of the amount of power generation from the photovoltaic facility 92, acquires the actual value of the amount of charge/discharge and the actual value of the remaining power of the power storage system 93 from the power storage system 93, and acquires the actual value of the amount of EV charge/discharge and the actual value of the remaining EV power from the EV charge/discharge device 94. The amount of power generation is generated power, and the unit thereof is W, kW, or the like. The amount of charge/discharge of the power storage system 93 is charge/discharge power with which the storage battery of the power storage system 93 is charged/discharged, and the unit thereof is W, kW, or the like. The remaining power of the power storage system 93 is the remaining level of the storage battery of the power storage system 93, and the unit thereof is Wh, kWh, or the like. The amount of EV charge/discharge is charge/discharge power with which the EV charge/discharge device 94 charges or discharges the storage battery of the EV, and the unit thereof is W, kW, or the like. The remaining EV power is the remaining level of the storage battery of the EV, and the unit thereof is Wh, kWh, or the like. The terminal device 95 periodically collects the above-described information and transmits the information to the data collection device 4. A collection cycle for these items of information is exemplified by but not limited to one minute. Hereinafter, the amount of charge/discharge of the power storage system 93 is also referred to as the amount of storage battery charge/discharge, and the remaining power of the power storage system 93 is also referred to as the remaining storage battery power. In this manner, the terminal device 95 transmits, to the power grid management system 11, actual values of at least one of a plurality of storage batteries connected to the power grid.

In addition, the terminal device 95 also acquires, for example, the connection time of the EV and the operating time of the distributed power source, that is, the photovoltaic facility 92, the power storage system 93, and the EV charge/discharge device 94, from the photovoltaic facility 92, the power storage system 93, and the EV charge/discharge device 94. Furthermore, the terminal device 95 collects facility information related to facilities such as the rated values and storage battery capacities of the photovoltaic facility 92, the power storage system 93, and the EV charge/discharge device 94. It is not necessary to periodically collect facility information; therefore, facility information is collected as needed, for example, when a new facility is connected to the terminal device 95.

In the example illustrated in FIG. 1, the distribution line 1 is divided into distribution section #1 and distribution section #2 by a section switch 3. The consumers 9-1 to 9-3 connected to distribution section #1 are grouped as group #1, and the consumers 9-4 to 9-6 connected to distribution section #2 are grouped as group #2. In this manner, in the present embodiment, the consumers 9 are grouped into groups including two or more consumers 9. Group information indicating which consumers 9 belong to each group is stored in the database device 5 as facility information. The group information may be input to the database device 5 by an operator, or may be stored in the database device 5 by being transmitted from another device (not illustrated). In FIG. 1, two groups are illustrated, but the number of groups is not limited thereto.

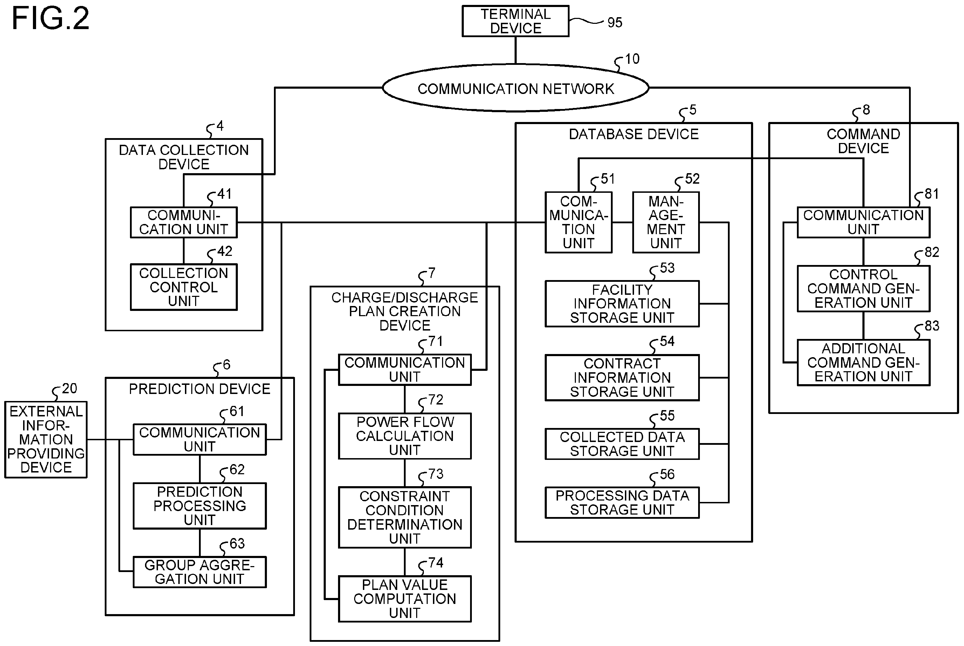

FIG. 2 is a diagram illustrating an exemplary configuration of each device constituting the power grid management system 11 according to the present embodiment. As illustrated in FIG. 2, the data collection device 4 includes a communication unit 41 that communicates with other devices, and a collection control unit 42 that controls collection of data from the terminal device 95. Based on the contract information stored in the database device 5, the collection control unit 42 acquires a terminal identifier (ID) which is identification information of the terminal device 95 in the consumer 9 who owns a storage battery and has a contract to control the storage battery according to the request of the power grid, and performs control for acquiring various types of information from the terminal device 95 using the acquired terminal ID. For example, the collection control unit 42 instructs each terminal device 95 to collect the amount of received power, the actual value of the amount of storage battery charge/discharge, the actual value of the remaining storage battery power, the actual value of the amount of EV charge/discharge, and the actual value of the remaining EV power by specifying a collection cycle via the communication unit 41, so as to periodically collect these items of information from each terminal device 95. Alternatively, the collection control unit 42 notifies each terminal device 95 of an instruction that requests the acquisition of these in every collection cycle. The communication unit 41 receives these items of information from the terminal device 95, and transmits the information to the database device 5 as collected data in association with the terminal ID. In this manner, the data collection device 4 collects actual values of charge/discharge of a plurality of storage batteries connected to the power grid. The actual values of charge/discharge include, for example, the actual value of the amount of storage battery charge/discharge, the actual value of the remaining storage battery power, the actual value of the amount of EV charge/discharge, and the actual value of the remaining EV power.

The database device 5 includes a communication unit 51 that communicates with other devices, a management unit 52 that manages information, a facility information storage unit 53 that stores facility information, a contract information storage unit 54 that stores contract information, a collected data storage unit 55 that stores the collected data collected by the data collection device 4, and a processing data storage unit 56 that stores each item of information computed by the prediction device 6, the charge/discharge plan creation device 7, and the command device 8. The management unit 52 stores information received from another device via the communication unit 51 in a corresponding one of the facility information storage unit 53, the contract information storage unit 54, the collected data storage unit 55, and the processing data storage unit 56, and manages the information in association with the storage location and the attribute of the information. In addition, according to the attribute information specified by a request to read information received from another device via the communication unit 51, the management unit 52 reads information from a corresponding one of the facility information storage unit 53, the contract information storage unit 54, the collected data storage unit 55, and the processing data storage unit 56, and transmits the information to the requester device via the communication unit 51. The attribute information includes, for example, information indicating the type of information, information indicating the date and time, and the like.

Facility information includes information such as the connection position of the facilities of each consumer 9 connected to the distribution line 1 and the rating and capacity of the facilities of each consumer 9. As described above, the rating and capacity of the facilities of the consumer 9 are acquired via, for example, the terminal device 95 and the data collection device 4. Alternatively, the rating and capacity may be input by an operator or the like, or may be acquired from another device (not illustrated). Contract information includes information such as the industry type, contract type (e.g. low voltage or high voltage), and contract power of the consumer 9. In addition, the contract information also includes the terminal ID of the terminal device 95 in the consumer 9 who owns a storage battery and has a contract to control the storage battery according to the request of the power grid. Collected data includes data collected by the data collection device 4 and external information provided from the external information providing device 20 via the prediction device 6. Processing data will be described later. Note that in cases where consumers other than the consumers 9, e.g. consumers having loads, are connected to the distribution line 1, information on these consumers is also stored in the contract information, the terminal device 95 and the smart meter 91 are also set in the consumers, and the terminal device 95 transmits the amount of received power acquired from the smart meter 91 to the data collection device 4.

The prediction device 6 includes: a communication unit 61 that communicates with other devices; a prediction processing unit 62 that predicts the actual load, amount of power generation, amount of charge/discharge, remaining power, and the like of each consumer 9 using contract information and collected data stored in the database device 5 and external information acquired from the external information providing device 20; and a group aggregation unit 63 that computes group-based prediction values using the results of prediction processing. As described above, the external information is weather information, for example. The group aggregation unit 63 transmits the group-based prediction values to the database device 5 as processing data. The communication unit 61 transmits the received external information to the database device 5 as collected data. Note that instead of the prediction device 6 acquiring external information from the external information providing device 20, the database device 5 may acquire external information from the external information providing device 20 and store the external information, and the prediction device 6 may acquire the external information from the database device 5.

The charge/discharge plan creation device 7 includes a communication unit 71 that communicates with other devices, and a power flow calculation unit 72 that performs power flow calculation using the group-based prediction values stored as processing data in the database device 5. The charge/discharge plan creation device 7 further includes: a constraint condition determination unit 73 that determines constraint conditions related to the amount of control of charge/discharge of a plurality of storage batteries, namely the power storage system 93 and the EV charge/discharge device 94, for securing the quality of the power grid by using the prediction values of the amount of charge/discharge of the plurality of storage batteries computed based on the actual values of charge/discharge of the plurality of storage batteries; and a plan value computation unit 74 that computes plan values of the amount of control of charge/discharge of the plurality of storage batteries by using the constraint conditions and the variation of the remaining power of at least a part of the plurality of storage batteries generated by controlling charge/discharge of at least a part of the plurality of storage batteries for securing the quality of the power grid. The plan value computation unit 74 transmits the plan values of the amount of control of charge/discharge of the storage batteries of the consumers 9, that is, the charge/discharge plan, to the database device 5 via the communication unit 71.

The command device 8 includes a communication unit 81 that communicates with other devices, and a control command generation unit 82 that generates a control command for the storage battery of each consumer 9 using the group-based amount of charge/discharge control stored as processing data in the database device 5 and various actual values transmitted from each terminal device 95 and stored as collected data in the database device 5, and transmits the control command to the terminal device 95 via the communication unit 81. Specifically, the control command generation unit 82 generates a control command for charge/discharge of each of a plurality of storage batteries connected to the power grid by using: a plan value that is the sum of amounts of control of charge/discharge of the plurality of storage batteries for each group including the plurality of storage batteries, the plan value being computed by the charge/discharge plan creation device 7; and the actual value of the amount of charge/discharge of the storage batteries transmitted from each of the plurality of storage batteries. The command device 8 further includes an additional command generation unit 83 that generates an additional command according to the separation between the control command and the actual value of charge/discharge transmitted from each terminal device 95 and stored as collected data in the database device 5, and transmits the additional command to the terminal device 95 via the communication unit 81. Specifically, the additional command generation unit 83 generates an additional command within the control cycle corresponding to the control command by using the difference between the control command and the actual value of the amount of charge/discharge of the storage batteries transmitted from each of the plurality of storage batteries after the transmission of the control command.

Although the functions of the power grid management system 11 in the example illustrated in FIGS. 1 and 2 are implemented by the four devices: the data collection device 4, the database device 5, the prediction device 6, the charge/discharge plan creation device 7, and the command device 8, the device configuration for implementing the functions of the power grid management system 11 is not limited to this example. The data collection device 4, the database device 5, the prediction device 6, the charge/discharge plan creation device 7, and the command device 8 may be integrated into one device. Alternatively, two or more of them may be integrated, or at least a part of them may be configured as subdivided devices. For example, the prediction device 6 and the charge/discharge plan creation device 7 may be integrated to constitute a charge/discharge plan creation device.

Next, operations in the present embodiment will be described. First, the overall operation of the power grid management system 11 will be described. As described above, the data collection device 4 periodically collects information from each terminal device 95 and transmits the collected data to the database device 5. The database device 5 stores the data received from the data collection device 4 in the collected data storage unit 55. The database device 5 also stores the external information acquired from the external information providing device 20 via the prediction device 6 in the collected data storage unit 55. These pieces of collected data are associated with a date and time.

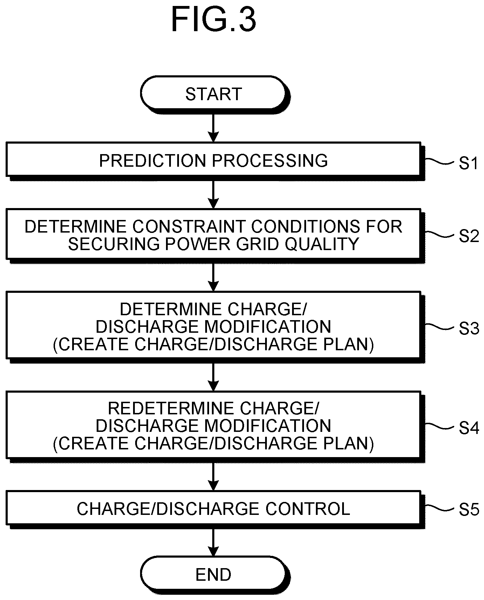

In the power grid management system 11, the prediction device 6, the charge/discharge plan creation device 7, and the command device 8 perform the following processing using the information stored in the database device 5. FIG. 3 is a flowchart illustrating an exemplary procedure in the power grid management system 11 according to the present embodiment. As illustrated in FIG. 3, the prediction device 6 first performs prediction processing (step S1).

Specifically, the prediction device 6 uses the collected data stored in the database device 5 to predict the actual load, the amount of power generation, and the amount of charge/discharge, remaining power, and controllable amount of storage batteries in each consumer 9 at each time section in a prediction target period, that is, a period for which a charge/discharge plan is to be created, aggregates the prediction results by group, and transmits the prediction values for each group to the database device 5. The controllable amount is an amount indicating how much the storage battery of the consumer 9 can be charged or discharged. Details of the prediction processing will be described later. The prediction target period is exemplified by but not limited to the next one day, and may be one year or one week. Each time frame in the prediction target period, that is, the duration of each time section, is exemplified by but not limited to 30 minutes. In the case of prediction for the next one day with time frames of 30 minutes, each prediction value is computed in a total of 48 time sections. The database device 5 stores the prediction values for each group in the processing data storage unit 56. Details of the operation of the prediction device 6 will be described later.

Next, the charge/discharge plan creation device 7 determines constraint conditions for securing power grid quality (step S2), and determines a charge/discharge modification (step S3). Specifically, the charge/discharge plan creation device 7 acquires the group-based prediction values and the facility information from the database device 5, performs power flow calculation using the group-based prediction values to obtain the passage current of the power grid facilities in the prediction target period, computes constraint conditions for computing plan values of the charge/discharge modification, or the amount of control, of the storage batteries of the consumers 9 if the passage current deviates from an allowable value, that is, if an overload occurs, and computes group-based plan values of the charge/discharge modification using the constraint conditions. The charge/discharge modification is the amount of change from a prediction value of the amount of charge/discharge, in other words, the amount of control based on a request from the power grid. As the charge/discharge plan creation device 7 determines the charge/discharge modification, plan values of the amount of control of the storage batteries of the consumers 9 in each time frame are determined based on the request of the power grid, whereby the charge/discharge plan is determined. In addition, the charge/discharge plan creation device 7 may create a demand-supply plan using the charge/discharge plan and the prediction values computed in step S1. The charge/discharge plan creation device 7 transmits the charge/discharge plan to the database device 5. The database device 5 stores the received charge/discharge plan in the processing data storage unit 56.

Next, the charge/discharge plan creation device 7 redetermines the charge/discharge modification on the day of charge/discharge (step S4). Specifically, the charge/discharge plan creation device 7 may perform steps S1 to S3 again by using the latest actual values and the like stored as collected data in the database device 5 and setting a certain period (e.g. one day) from the current time point as the prediction target period, or may redetermine the charge/discharge modification by correcting the created charge/discharge plan using the latest actual values and the like stored as collected data in the database device 5. For example, in step S3, the charge/discharge modification is redetermined by setting 24 hours at intervals of 30 minutes as the prediction target period. The charge/discharge plan creation device 7 transmits the redetermined charge/discharge plan to the database device 5. The database device 5 stores the received charge/discharge plan in the processing data storage unit 56.

Next, the command device 8 performs charge/discharge control (step S5). Specifically, the command device 8 generates a control command for each storage battery of each consumer 9 using the acquired data and the charge/discharge plan computed in step S4, that is, the group-based plan values of the charge/discharge modification, from the database device 5, and transmits the control command to the corresponding terminal device 95. In addition, the command device 8 generates an additional command according to the separation between the control command and the actual value and transmits the additional command to the terminal device 95. The command device 8 may transmit the control command and the additional command to the database device 5 as processing data to cause the database device 5 to store the data.

Next, details of the prediction processing in the prediction device 6 will be described. Before actually computing prediction values of the actual load, amount of charge/discharge, and the like, the prediction device 6 computes prediction model information for use in prediction of each item to be predicted, such as information indicating the relationship between the temperature and the actual load based on past actual values. There is no restriction on the timing of computing prediction model information; for example, prediction model information may be periodically computed once a month. The prediction model information includes temperature correlation information, solar radiation intensity correlation information, EV charge/discharge record information, remaining EV power record information, storage battery correlation information, and remaining power reference information to be described later. First, an example of a method of computing prediction model information will be described.

The prediction processing unit 62 of the prediction device 6 acquires, from the database device 5 via the communication unit 61, information indicating the industry type, contract type, contract power, and the like of each consumer 9. In addition, the prediction processing unit 62 of the prediction device 6 acquires, from the database device 5 via the communication unit 61, actual values collected by the terminal device 95 of each consumer 9 and the temperature and solar radiation intensity at the date and time corresponding to the actual values. The actual values are actual values of the amount of received power, amount of power generation, amount of storage battery charge/discharge, remaining storage battery power, amount of EV charge/discharge, and remaining EV power. Note that the prediction processing unit 62 may acquire, for example, all the actual values stored in the database device 5, or may acquire actual values in the same season or the same month as the prediction target period.

The prediction processing unit 62 extracts low-voltage consumers from among the consumers 9 based on the contract type of the consumers 9, classifies the extracted consumers 9 into sets of consumers 9 each having the same industry type, contract type, and contract power, and computes the actual loads of the plurality of consumers 9 belonging to each set using the amount of received power, amount of power generation, amount of storage battery charge/discharge, and amount of EV charge/discharge. Then, the mean of actual loads on each day of the week and in each time slot is obtained for each set. The actual load is the power consumed by the consumer 9. Defining received power as a value obtained by converting the amount of received power into power in a corresponding time slot, the received power can be expressed by Formula (1) below. Note that in the following formula, the direction in which power is supplied to the consumer 9 is regarded as positive, and the direction of the reverse power flow to the power grid is regarded as negative. Therefore, the amount of storage battery charge/discharge and the amount of EV charge/discharge are positive values at the time of charging and negative values at the time of discharging. The prediction processing unit 62 can compute the actual load from Formula (1) below.

$$\text{Received power=Actual load-Amount of power}$$
$$\text{generation+Amount of storage battery}$$
$$\text{charge/discharge+Amount of EV charge/discharge} \quad (1)$$

The prediction processing unit 62 obtains, for each set, temperature correlation information indicating the relationship between the mean of actual loads and the temperature on each day of the week and in each time slot. The temperature correlation information may be a table indicating the correspondence between the temperature and the actual load for each set, day of the week, and time slot, or may be an expression indicating the actual load as a function of the temperature. As a result, temperature correlation information is computed, indicating the relationship between the mean of actual loads and the temperature for each industry type, contract type, contract power, day of the week, and time slot. A time slot is a division of one day and is, for example, 30 minutes long as in the case of a time frame described above. However, the length of a time slot is not limited thereto. In addition, the temperature correlation information may be computed not for each day of the week but separately for weekdays and weekends/holidays, for example. Classifications for computing the temperature correlation information need not necessarily be based on the industry type, contract type, contract power, and day of the week, and other items may be used for classification, or some of these items may not necessarily be used for classification, and the present disclosure is not limited to this example.

In addition, for the high-voltage consumers among the consumers 9, the prediction processing unit 62 similarly obtains the actual load using Formula (1), obtains the mean of actual loads on each day of the week and in each time slot using the actual load of the consumer 9 itself instead of the actual load of each set, and computes the temperature correlation information using the mean and the temperature.

In cases where consumers who do not have a storage battery are connected to the distribution line 1, the actual load of these consumers is computed using the actual value of the amount of received power or the amount of received power and the amount of power generation. Low-voltage consumers are placed in one of the above-mentioned sets that depend on the industry type, contract type, and contract power, for which the mean of actual loads is computed. For high-voltage consumers, temperature correlation information is computed for each day of the week and each time slot.

In addition, the prediction processing unit 62 computes, for each consumer 9, solar radiation intensity correlation information indicating the relationship between the solar radiation intensity and the amount of power generation in each time slot by using the actual value of the amount of power generation, that is, the amount of photovoltaic generation, and the actual value of the solar radiation intensity corresponding thereto. The solar radiation intensity correlation information may also be a table or an expression indicating the amount of power generation as a function of the solar radiation intensity.

In addition, the prediction processing unit 62 computes the mean amount of EV charge/discharge on each day of the week and in each time slot for each rating of the EV charge/discharge device 94, and holds the mean amount of EV charge/discharge on each day of the week and in each time slot as EV charge/discharge record information in a table, for example, for each rating of the EV charge/discharge device 94. Note that if there are actual values of the amount of EV charge/discharge accumulated to a certain extent, e.g. for more than one year, the mean thereof on each day of the week and in each time slot may be computed as EV charge/discharge record information for each consumer 9. For the remaining EV power, similarly, the mean thereof on each day of the week and in each time slot is held as remaining EV power record information in a table, for example, for each rating of the EV charge/discharge device 94. If there are actual values of the remaining EV power accumulated to a certain extent, the mean thereof on each day of the week and in each time slot may be held as remaining EV power record information for each consumer 9.

In addition, the prediction processing unit 62 computes, as storage battery correlation information for each consumer 9, the relationship between the actual value of the amount of storage battery charge/discharge on each day of the week and in each time slot and the actual value of "-Actual load+Amount of power generation+Amount of EV charge/discharge". The storage battery correlation information may be a table or a relational expression. Note that in the following description, the power generation direction and the discharge direction, that is, the direction of the reverse power flow to the power grid, are regarded as positive, and the power consumption direction and the charge direction are regarded as negative. Since the power consumption direction in Formula (1) above is positive, "-" is added to the actual load. Note that the actual load is power consumption in the consumer 9, and when the amount of EV charge/discharge is zero, "-Actual load+Amount of power generation+Amount of EV charge/discharge" is the difference between power consumption and power generation. In addition, the prediction processing unit 62 may include the amount of EV charge in the power consumption, and compute and hold, as storage battery correlation information, the relationship between the difference between power consumption and power generation and the amount of charge/discharge of the storage battery in the consumer 9.

In addition, the prediction processing unit 62 computes the mean and dispersion of actual values of the remaining storage battery power in each time slot for each consumer 9, and sets the time slot with the smallest dispersion and the mean in this time slot as a reference time slot and a reference value, respectively. The dispersion is, for example, the variance, standard deviation, or difference between the maximum value and the minimum value. The prediction processing unit 62 holds the reference time slot and the reference value for each consumer 9 as remaining power reference information. The remaining power reference information is used as a starting point of calculation for predicting the remaining power of the power storage system 93 on the prediction target day.

Through the above processing, the temperature correlation information, solar radiation intensity correlation information, EV charge/discharge record information, remaining EV power record information, storage battery correlation information, and remaining power reference information are computed as prediction model information.

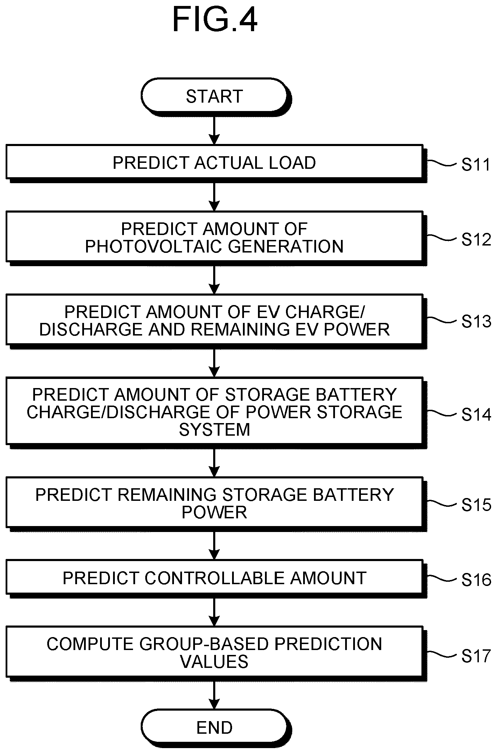

Next, the prediction processing unit 62 predicts the actual load, amount of charge/discharge, and the like using the prediction model information. FIG. 4 is a flowchart illustrating an exemplary procedure for prediction processing according to the present embodiment. First, the prediction processing unit 62 of the prediction device 6 predicts the actual load (step S11). Specifically, the prediction processing unit 62 acquires the industry type, type, contract type, and contract power from the database device 5, and acquires the forecast value of temperature in each time slot of the prediction target period from the external information providing device 20. Then, for the low-voltage consumers, the prediction processing unit 62 identifies a set to which each consumer 9 belongs, and predicts the actual load of each consumer 9 in each time slot according to the day of the prediction target period using the temperature correlation information for each set, day of the week, and time slot and the forecast value of temperature. For the high-voltage consumers, the prediction processing unit 62 similarly predicts the actual load in each time slot according to the day of the week of the prediction target period using the temperature correlation information corresponding to the consumers 9.

Next, the prediction processing unit 62 of the prediction device 6 predicts the amount of photovoltaic generation (step S12). Specifically, the prediction processing unit 62 acquires the forecast value of solar radiation intensity in each time slot of the prediction target period from the external information providing device 20. Then, the prediction processing unit 62 predicts the amount of power generation of each consumer 9 in each time slot using the solar radiation intensity correlation information and the forecast value of solar radiation intensity.

Next, the prediction processing unit 62 of the prediction device 6 predicts the amount of EV charge/discharge and the remaining EV power (step S13). Specifically, the prediction processing unit 62 predicts the amount of EV charge/discharge and the remaining EV power on each day of the week and in each time slot using the EV charge/discharge record information and the remaining EV power record information. The EV charge/discharge record information and the remaining EV power record information are means that are based on past records on each day of the week and in each time slot, and in the present embodiment, these means are used as prediction values of the amount of EV charge/discharge and the remaining EV power. In a case where the EV charge/discharge record information and the remaining EV power record information are computed for each consumer 9, prediction values are obtained using the EV charge/discharge record information and the remaining EV power record information corresponding to the consumer 9. In a case where the EV charge/discharge record information and the remaining EV power record information are not computed for each consumer 9, prediction values are obtained using the EV charge/discharge record information and the remaining EV power record information for each rating of the EV charge/discharge device 94.

Next, the prediction processing unit 62 of the prediction device 6 predicts the amount of storage battery charge/discharge of the power storage system 93 (step S14). Specifically, the prediction processing unit 62 predicts, for each consumer 9, the amount of storage battery charge/discharge which is the amount of charge/discharge of the power storage system 93 in each time slot according to the day of the week of the prediction target period using the storage battery correlation information and the prediction values computed in steps S11 to S13.

Next, the prediction processing unit 62 of the prediction device 6 predicts the remaining storage battery power of the power storage system 93 (step S15). Specifically, for each consumer 9, the prediction processing unit 62 obtains a reference value in the reference time slot using the remaining power reference information, and sets the reference value as the prediction value of the remaining storage battery power that is the remaining power of the power storage system 93 in the reference time slot. The prediction processing unit 62 predicts the remaining charge of the storage battery in each time slot during the prediction target period using the reference value in the reference time slot and the amount of storage battery charge/discharge in each time slot predicted in step S14.

Next, the prediction processing unit 62 of the prediction device 6 predicts the controllable amount (step S16). Specifically, the prediction processing unit 62 computes respective prediction values of the maximum allowable modification of storage battery charge/discharge, the minimum allowable modification of storage battery charge/discharge, the maximum allowable modification of EV charge/discharge, and the minimum allowable modification of EV charge/discharge as prediction values of the controllable amount with Formulas (2) to (5) below using the prediction value of the amount of EV charge/discharge and the prediction value of the amount of storage battery charge/discharge computed in steps S13 and S14. Here, as described above, since the power generation direction and the discharge direction are positive, the maximum allowable modification of storage battery charge/discharge is the maximum value of the amount of discharge by which the prediction value can be changed in the power storage system 93, and the minimum allowable modification of storage battery charge/discharge is a value obtained by adding "-" to the maximum value of the absolute value of the amount of charge by which the prediction value can be changed in the power storage system 93. Similarly, the maximum allowable modification of EV charge/discharge is the maximum value of the dischargeable amount of the EV charge/discharge device 94, and the minimum allowable modification of EV charge/discharge is a value obtained by adding "-" to the maximum value of the absolute value of the chargeable amount of the EV charge/discharge device 94. The maximum amount of storage battery charge, the maximum amount of storage battery discharge, the maximum amount of EV charge, and the maximum amount of EV discharge are predetermined values, for example, rated values.

$$
\begin{aligned}
&\text{Prediction value of maximum allowable} \\
&\text{modification of storage battery charge/discharge} \\
&\quad = \text{Maximum amount of storage battery charge} - \text{Prediction} \\
&\text{value of amount of storage battery charge/discharge} \qquad (2)
\end{aligned}
$$

$$
\begin{aligned}
&\text{Prediction value of minimum allowable modification of} \\
&\text{storage battery charge/discharge} \\
&\quad = -\text{Maximum amount of storage battery} \\
&\text{discharge} - \text{Prediction value of amount of storage battery} \\
&\text{charge/discharge} \qquad (3)
\end{aligned}
$$

$$
\begin{aligned}
&\text{Prediction value of maximum allowable modification of} \\
&\text{EV charge/discharge} \\
&\quad = \text{Maximum amount of EV charge} - \text{Prediction value of} \\
&\text{amount of EV charge/discharge} \qquad (4)
\end{aligned}
$$

Prediction value of minimum allowable modification of

EV charge/discharge

=-Maximum amount of EV discharge-Prediction value of

amount of EV charge/discharge (5)

Next, the prediction processing unit 62 of the prediction device 6 computes group-based prediction values (step S17). Specifically, the prediction processing unit 62 computes group-based prediction values by aggregating each of the prediction values computed in steps S11 to S16 by group, i.e. distribution section, using the group information in the facility information stored in the database device 5. Through the above processing, the respective prediction values of the actual load, amount of power generation, amount of storage battery charge/discharge, remaining storage battery power, amount of EV charge/discharge, remaining EV power, maximum allowable modification of storage battery charge/discharge, minimum allowable modification of storage battery charge/discharge, maximum allowable modification of EV charge/discharge, and minimum allowable modification of EV charge/discharge for each group in each time slot in the prediction target period are computed. The prediction processing unit 62 transmits the computed prediction values to the database device 5, and the database device 5 stores the received prediction values in the processing data storage unit 56 as processing data. Although it is difficult to predict the amount of storage battery charge/discharge, remaining storage battery power, amount of EV charge/discharge, and remaining EV power with high accuracy for the individual consumers 9, it is considered that aggregation by group reduces the influence of the dispersion in the individual situation of the consumers 9 in each time slot, which can improve the prediction accuracy. Therefore, in this example, the prediction accuracy is improved through aggregation by group.

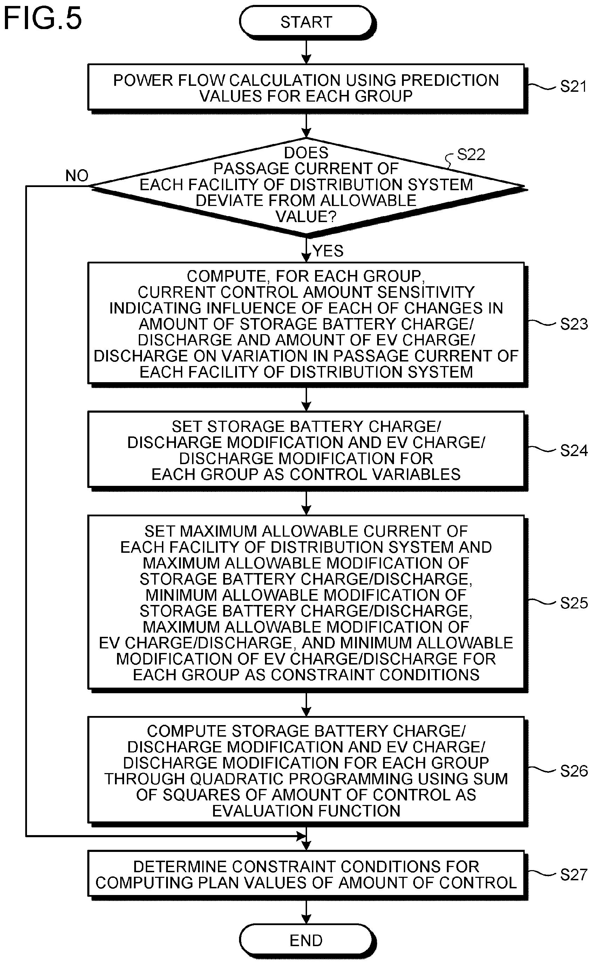

Next, the aforementioned determination of constraint conditions for securing power grid quality in step S2 will be described. FIG. 5 is a flowchart illustrating an exemplary procedure for determining constraint conditions for securing power grid quality according to the present embodiment. The charge/discharge plan creation device 7 performs the following processing in each time slot, that is, each time section, among the prediction target time slots. First, the charge/discharge plan creation device 7 performs power flow calculation using prediction values for each group (step S21). That is, the charge/discharge plan creation device 7 performs power flow calculation using the prediction values of the amount of charge/discharge aggregated for each group and the prediction values of the power consumption and the amount of power generation of each group.

Specifically, the power flow calculation unit 72 of the charge/discharge plan creation device 7 acquires, from the database device 5 via the communication unit 71, the group-based prediction values of the actual load, amount of power generation, amount of power storage charge/discharge, and amount of EV power storage charge/discharge described above in the prediction target period, and the facility information. Then, the power flow calculation unit 72 performs power flow calculation using the acquired prediction values and information included in the facility information such as the connection position of each facility in the distribution system, and computes the passage current of each facility in the distribution system. As a specific method for the power flow calculation unit 72 to perform power flow calculation, any method can be used such as the Newton-Raphson method and the fast decoupled load flow method, but the specific method is not limited thereto.

The power flow calculation unit 72 determines whether the passage current of each facility of the distribution system deviates from an allowable value (step S22). The allowable value is a value smaller than or equal to the maximum passage current allowed for each facility of the distribution system. The maximum allowable current is predetermined and stored in the facility information. Step S22 specifically involves determining whether there is a deviation from the allowable value based on whether the maximum allowable current is exceeded. In response to determining that the passage current of each facility of the distribution system deviates from the allowable value (Yes in step S22), the charge/discharge plan creation device 7 computes, for each group, current control amount sensitivity indicating the influence of each of the changes in the amount of storage battery charge/discharge and the amount of EV charge/discharge on the variation in the passage current of each facility of the distribution system (step S23).

Specifically, in response to determining that the passage current of each facility of the distribution system deviates from the allowable value, the power flow calculation unit 72 notifies the constraint condition determination unit 73. Upon receiving this notification, the constraint condition determination unit 73 changes the amount of storage battery charge/discharge of each group by a predetermined amount such as 1 kW, causes the power flow calculation unit 72 to execute the power flow calculation again, and computes the variation of the passage current of the facility having the deviation from the allowable value. The constraint condition determination unit 73 computes, as the current control amount sensitivity, the variation of the passage current of the facility having the deviation from the allowable value in the case that the amount of storage battery charge/discharge is changed by 1 kW, using the variation of the amount of storage battery charge/discharge and the variation of the passage current of the facility having the deviation from the allowable value using the variation of the amount of storage battery charge/discharge and the variation of the passage current of the facility having the deviation from the allowable value. Regarding the amount of EV charge/discharge, the constraint condition determination unit 73 similarly computes, for each group as the current control amount sensitivity, the variation of the passage current of the facility having the deviation from the allowable value in the case that the amount of EV charge/discharge is changed by 1 kW.

Next, the constraint condition determination unit 73 sets the storage battery charge/discharge modification and the EV charge/discharge modification for each group as control variables (step S24), and sets the maximum allowable current of each facility of the distribution system and the maximum allowable modification of storage battery charge/discharge, minimum allowable modification of storage battery charge/discharge, maximum allowable modification of EV charge/discharge, and minimum allowable modification of EV charge/discharge for each group as constraint conditions (step S25). Then, the constraint condition determination unit 73 computes the storage battery charge/discharge modification and the EV charge/discharge modification for each group through quadratic programming using the sum of squares of the amount of control as an evaluation function (step S26). Specifically, the constraint condition determination unit 73 obtains the square of the amount of control of the storage battery charge/discharge modification and the EV charge/discharge modification, which are the control variables of each group, that is, the modification of the amount of charge/discharge, uses the sum of these as an evaluation function, and computes the storage battery charge/discharge modification and the EV charge/discharge modification through quadratic programming so as to minimize the evaluation function.

Next, the constraint condition determination unit 73 determines constraint conditions for computing plan values of the amount of control (step S27). Specifically, the constraint condition determination unit 73 determines the maximum allowable modification of storage battery charge/discharge, the minimum allowable modification of storage battery charge/discharge, the maximum allowable modification of EV charge/discharge, and the minimum allowable modification of EV charge/discharge as the constraint conditions for computing plan values of the amount of control. These prediction values are computed using Formulas (2) to (5) above. The prediction values are changed using the storage battery charge/discharge modification and the EV charge/discharge modification computed in step S26, whereby the maximum allowable modification of storage battery charge/discharge, the minimum allowable modification of storage battery charge/discharge, the maximum allowable modification of EV charge/discharge, and the minimum allowable modification of EV charge/discharge are determined. As described above, if an overload is predicted to occur in the power grid as a result of the power flow calculation, the constraint condition determination unit 73 changes the constraint conditions related to the amount of charge/discharge for each group such that the overload is eliminated.

In response to selecting No in step S22, that is, in response to determining that the passage current of each facility of the distribution system does not deviate from the allowable value, step S27 is performed. Specifically, in response to determining that the passage current of each facility of the distribution system does not deviate from the allowable value, the power flow calculation unit 72 notifies the constraint condition determination unit 73. Upon receiving this notification, in step S27, the constraint condition determination unit 73 sets the values predicted with Formulas (2) to (5) above respectively as the maximum allowable modification of storage battery charge/discharge, the minimum allowable modification of storage battery charge/discharge, the maximum allowable modification of EV charge/discharge, and the minimum allowable modification of EV charge/discharge. This case means that the amount of control for all the power storage systems 93 and the EV charge/discharge devices 94 is zero.

After the above processing illustrated in FIG. 5, which is termed processing #1, the constraint condition determination unit 73 changes the setting values as follows, and performs processing #2, which is the processing illustrated in FIG. 5, again as processing that assumes the maximum discharge. First, in the power flow calculation in step S21, the power flow calculation is performed using "Amount of power storage charge/discharge temp=Prediction value of amount of storage battery charge/discharge+Maximum allowable modification of storage battery charge/discharge" instead of the prediction value of the amount of storage battery charge/discharge, and using "Amount of EV power storage charge/discharge temp=Prediction value of amount of EV charge/discharge+Maximum allowable modification of EV charge/discharge" instead of the prediction value of the amount of EV charge/discharge. In step S24, the amount of power storage charge/discharge temp and the amount of EV power storage charge/discharge temp of each group are set as control variables.

In step S25, the following conditions are set as the constraint conditions.

$$\text{Maximum allowable modification of storage battery}$$
$$\text{charge/discharge temp=0} \quad (6)$$

$$\text{Minimum allowable modification of storage battery charge/discharge temp=Minimum allowable modification of storage battery charge/discharge–Maximum allowable modification of storage battery charge/discharge} \quad (7)$$

$$\text{Maximum allowable modification of EV charge/discharge temp=0} \quad (8)$$

$$\text{Minimum allowable modification of EV charge/discharge temp=Minimum allowable modification of EV charge/discharge–Maximum allowable modification of EV charge/discharge} \quad (9)$$

Then, in step S26, the storage battery charge/discharge modification temp and the EV charge/discharge modification temp for each grid group are computed through quadratic programming, and the results are reflected as follows.

$$\text{Maximum allowable modification of storage battery charge/discharge=Maximum allowable modification of storage battery charge/discharge+Storage battery charge/discharge modification temp} \quad (10)$$

$$\text{Maximum allowable modification of EV charge/discharge=Maximum allowable modification of EV charge/discharge+EV charge/discharge modification temp} \quad (11)$$

With the setting values changed as described above and the processing illustrated in FIG. 5 performed again, if the passage current deviates from the allowable value, the maximum allowable modification of storage battery charge/discharge and the maximum allowable modification of EV charge/discharge are changed in step S27 according to the storage battery charge/discharge modification temp and the EV charge/discharge modification temp computed in step S26.

If there is an absolute value smaller than the corresponding value computed in processing #1 among the maximum allowable modification of storage battery charge/discharge, the minimum allowable modification of storage battery charge/discharge, the maximum allowable modification of EV charge/discharge, and the minimum allowable modification of EV charge/discharge computed in processing #2, the constraint condition determination unit 73 updates that value to the value computed in processing #2.

Next, the setting values are changed as follows, the setting values are changed as follows, and processing #3, which is the processing illustrated in FIG. 5, is performed again as processing that assumes the maximum charge. First, in the power flow calculation in step S21, the power flow calculation is performed using "Amount of power storage charge/discharge temp=Prediction value of amount of power storage charge/discharge+Minimum allowable modification of storage battery charge/discharge" instead of the prediction value of the amount of storage battery charge/discharge, and using "Amount of EV power storage charge/discharge temp=Prediction value of amount of EV power storage charge/discharge+Minimum allowable modification of EV charge/discharge" instead of the prediction value of the amount of EV charge/discharge. In step S24, the amount of power storage charge/discharge temp and the amount of EV power storage charge/discharge temp of each group are set as control variables.

In step S25, the following conditions are set as the constraint conditions.

$$\text{Maximum allowable modification of storage battery charge/discharge temp=Maximum allowable modification of storage battery charge/discharge−Minimum allowable modification of storage battery charge/discharge} \quad (12)$$

$$\text{Minimum allowable modification of storage battery charge/discharge temp=0} \quad (13)$$

$$\text{Maximum allowable modification of EV charge/discharge temp=Maximum allowable modification of EV charge/discharge−Minimum allowable modification of EV charge/discharge} \quad (14)$$

$$\text{Minimum allowable modification of EV charge/discharge temp=0} \quad (15)$$

Then, in step S26, the storage battery charge/discharge modification temp and the EV charge/discharge modification temp for each grid group are computed through quadratic programming, and the results are reflected as follows.

$$\text{Minimum allowable modification of storage battery charge/discharge=Minimum allowable modification of storage battery charge/discharge+Storage battery charge/discharge modification temp} \quad (16)$$

$$\text{Minimum allowable modification of EV charge/discharge=Minimum allowable modification of EV charge/discharge+EV charge/discharge modification temp} \quad (17)$$

With the setting values changed as described above and the processing illustrated in FIG. 5 performed again, if the passage current deviates from the allowable value, the minimum allowable modification of storage battery charge/discharge and the minimum allowable modification of EV charge/discharge are changed in step S27 according to the storage battery charge/discharge modification temp and the EV charge/discharge modification temp computed in step S26.

In this manner, in the present embodiment, the amount of control is obtained on the assumption that the prediction values are changed in the discharge direction and the charge direction, whereby the possible range of the amount of control defined by the maximum allowable modification of storage battery charge/discharge, the minimum allowable modification of storage battery charge/discharge, the maximum allowable modification of EV charge/discharge, and the minimum allowable modification of EV charge/discharge is narrowed stepwise.

As described above, the constraint condition determination unit 73 determines the maximum allowable modification of storage battery charge/discharge, the minimum allowable modification of storage battery charge/discharge, the maximum allowable modification of EV charge/discharge, and the minimum allowable modification of EV charge/discharge, which are constraint conditions for each group, by using each prediction value aggregated for each group.

Next, the constraint condition determination unit 73 passes information indicating the determined constraint conditions, namely the maximum allowable modification of storage battery charge/discharge, the minimum allowable modification of storage battery charge/discharge, the maximum allowable modification of EV charge/discharge, and the minimum allowable modification of EV charge/discharge, to the plan value computation unit 74, and the plan value computation unit 74 computes plan values of the amount of control of charge/discharge using this information.

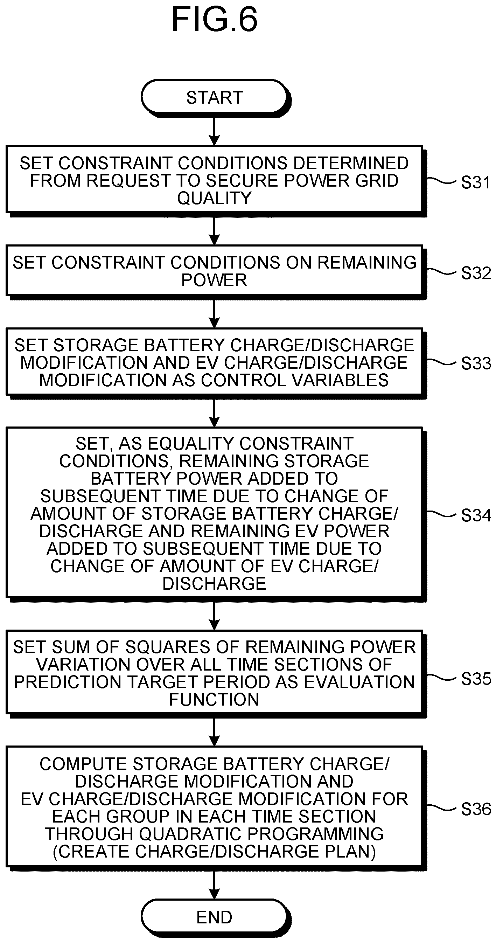

FIG. 6 is a flowchart illustrating an exemplary procedure for computing the amount of control of charge/discharge according to the present embodiment. The plan value computation unit 74 sets the constraint conditions determined from a request to secure power grid quality (step S31). Specifically, the plan value computation unit 74 uses the maximum allowable modification of storage battery charge/discharge, the minimum allowable modification of storage battery charge/discharge, the maximum allowable modification of EV charge/discharge, and the minimum allowable modification of EV charge/discharge received from the constraint condition determination unit 73 to set the constraint conditions shown in Formulas (18) and (19) as follows in each time slot for each group.

$$\text{Minimum allowable modification of storage battery}$$
$$\text{charge/discharge} <= \text{Storage battery charge/discharge}$$
$$\text{modification} <= \text{Maximum allowable modification of storage}$$
$$\text{battery charge/discharge} \quad (18)$$

$$\text{Minimum allowable modification of EV}$$
$$\text{charge/discharge} <= \text{EV charge/discharge modification} <= \text{Maximum}$$
$$\text{allowable modification of EV charge/discharge} \quad (19)$$

Next, the plan value computation unit 74 sets the constraint conditions on the remaining power (step S32). Specifically, the plan value computation unit 74 sets the constraint conditions shown in Formulas (20) and (21) below. Note that the minimum allowable remaining storage battery power, the maximum allowable remaining storage battery power, the minimum allowable remaining EV power, and the maximum allowable remaining EV power are set in advance using, for example, allowable values in the power storage system 93 and the storage battery of the EV to be charged by the EV charge/discharge device 94, and are stored in the facility information.

$$\text{Minimum allowable remaining storage battery}$$
$$\text{power} <= \text{Remaining storage battery power} <= \text{Maximum allowable}$$
$$\text{remaining storage battery power} \quad (20)$$

$$\text{Minimum allowable remaining EV power} <= \text{Remaining EV}$$
$$\text{power} <= \text{Maximum allowable remaining EV power} \quad (21)$$

Next, the plan value computation unit 74 sets the storage battery charge/discharge modification and the EV charge/discharge modification as control variables (step S33), and sets, as equality constraint conditions, the remaining storage battery power added to the subsequent time due to the change of the amount of storage battery charge/discharge and the remaining EV power added to the subsequent time due to the change of the amount of EV charge/discharge (step S34). Specifically, when there is a group for which the amount of storage battery charge/discharge is to be changed, the plan value computation unit 74 adds the amount of power of "Storage battery charge/discharge modification×Width of time slot for change" to the remaining storage battery power after the time slot for change. Similarly, when there is a group for which the amount of EV charge/discharge is to be changed, the plan value computation unit 74 adds the amount of power of "EV charge/discharge modification×Width of time slot for change" to the remaining EV power after the time slot for change. These equalities are set as equality constraint conditions.

Next, the plan value computation unit 74 sets the sum of squares of the remaining power variation over all the time sections of the prediction target period as an evaluation function (step S35), and computes the storage battery charge/discharge modification and the EV charge/discharge modification for each group in each time section through quadratic programming (step S36). The remaining power variation is the variation of the remaining power that is changed by controlling the charge/discharge of the storage batteries of the consumers 9 from the power grid management system 11. In the present embodiment, the sum of squares of the remaining power variation over all the time sections in the prediction target period, that is, the period for which plan values are to be computed, is used as an evaluation function, and the storage battery charge/discharge modification and the EV charge/discharge modification in each time slot for each group are obtained so as to minimize the evaluation function, whereby the amount of control of charge/discharge for securing the quality of the power grid can be determined, with the influence on the consumers 9 reduced as much as possible. By determining the battery charge/discharge modification and the EV charge/discharge modification in step S36, a charge/discharge plan for the storage batteries of the consumers 9, that is, plan values of the amount of control of the storage batteries of the consumers 9, is determined. In this manner, the plan value computation unit 74 computes, as a plan value for each group, the sum of amounts of control of the storage batteries belonging to the group. The charge/discharge plan creation device 7 transmits the storage battery charge/discharge modification and the EV charge/discharge modification in each time slot for each group to the database device 5 as the plan values of the amount of control.

Next, details of the processing in steps S4 and S5 illustrated in FIG. 3 will be described. Until step S3, for example, a predetermined future period such as the next and subsequent days is set as a prediction target period, and prediction processing and computation of plan values of the amount of control of charge/discharge are performed. In contrast, step S4 and step S5 are processes on the day when supply and demand occur. As described above, in step S4, plan values of the amount of control of charge/discharge are computed again for a certain period such as 24 hours from the current time slot. The method of recreating plan values may be to perform the same processing again until step S3 using new actual values, or to correct the computed plan values of the amount of control of charge/discharge using new actual values. In the recreation, actual values in the latest time slot may be used as prediction values for each consumer 9 in the prediction processing, and actual values in the latest time slot may be used for correction in the subsequent time slots.

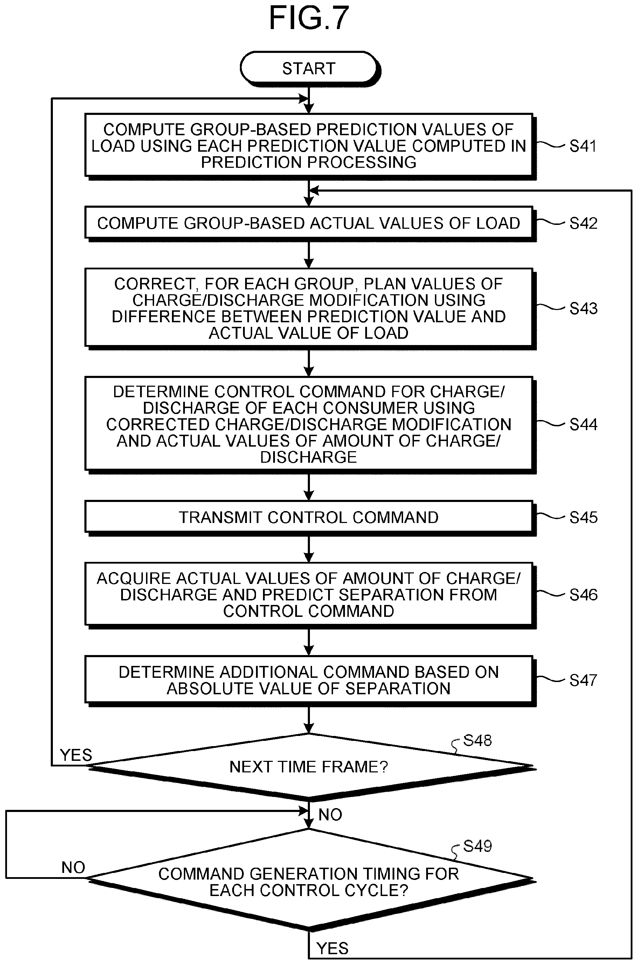

After step S4, the storage batteries of the consumers 9 are controlled using the plan values of the amount of control of charge/discharge. FIG. 7 is a flowchart illustrating an exemplary procedure for controlling the storage batteries of the consumers 9 in the command device 8 according to the present embodiment. The command device 8 computes the group-based prediction values of load using each prediction value computed in the prediction processing (step S41). Specifically, the control command generation unit 82 acquires each group-based prediction value in the time slot corresponding to the current time point computed in the prediction processing from the database device 5 via the communication unit 81, and computes the group-based prediction values of load using each prediction value. This load is not the actual load described above, but is a value obtained by subtracting the power generated and discharged from the power supplied from the distribution line 1 to the group, that is, the actual load. Therefore, the prediction value of the load of each group can be computed with Formula (22) below.

$$
\begin{aligned}
\text{Prediction value of load} = &\text{Prediction value of actual} \\
&\text{load} - \text{Prediction value of amount of power} \\
&\text{generation} - \text{Prediction value of amount of storage battery} \\
&\text{charge/discharge} - \text{Prediction value of amount of EV} \\
&\text{charge/discharge} \quad (22)
\end{aligned}
$$

Next, the command device 8 computes the group-based actual values of load (step S42). Specifically, the control command generation unit 82 acquires the actual values of the amount of received power for the latest fixed time from the database device 5 via the communication unit 81, aggregates the acquired actual values of the amount of received power by group, and computes the mean of the aggregation results for the fixed time as the group-based actual value of load. For example, assuming that the collection cycle of received power is one minute and the fixed time is five minutes, the mean for five minutes of the actual values of the amount of received power aggregated by group is computed as the actual value of load. Note that the command device 8 may directly acquire actual values from the data collection device 4 with no help of the database device 5.

Next, the command device 8 corrects, for each group, the plan values of the charge/discharge modification using the difference between the prediction value and the actual value of load (step S43). Specifically, the control command generation unit 82 uses the group-based plan values of the storage battery charge/discharge modification and the EV charge/discharge modification acquired from the database device 5 via the communication unit 81 to compute the corrected storage battery charge/discharge modification and EV charge/discharge modification such that the total value of the corrected group-based storage battery charge/discharge modification and EV charge/discharge modification satisfies Formula (23) below. In Formula (23), both the storage battery charge/discharge modification and the amount of EV charge/discharge are corrected, but only the storage battery charge/discharge modification may be corrected using the difference between the actual value of load and the prediction value of load.

$$\text{Corrected storage battery charge/discharge}$$
$$\text{modification+Corrected EV charge/discharge modification}$$
$$=\text{Plan value of storage battery charge/discharge}$$
$$\text{modification+Plan value of EV charge/discharge modification}$$
$$+\text{Actual value of load-Prediction value of load} \quad\quad (23)$$

The ratio between the corrected storage battery charge/discharge modification and the corrected EV charge/discharge modification is determined according to, for example, the ratio between the plan value of the storage battery charge/discharge modification and the plan value of the EV charge/discharge modification. In the present embodiment, the load and the amount of power generation are also measured and predicted, but the amount of control of each storage battery may be determined by performing prediction related to the charge/discharge of each storage battery without predicting the load and the amount of power generation.

Next, the command device 8 determines a control command for charge/discharge of each consumer 9 using the corrected charge/discharge modification and actual values of the amount of charge/discharge (step S44). Specifically, the control command generation unit 82 acquires the actual value of the amount of storage battery charge/discharge for the latest fixed time from the database device 5 via the communication unit 81, and determines the control command by allocating the corrected group-based amount of storage battery charge/discharge to each consumer 9 using the actual values of the amount of storage battery charge/discharge and the remaining storage battery power. At this time, the command device 8 determines the control command by considering, for example, prediction errors related to the amount of charge/discharge and the remaining power of the power storage system 93 and the EV charge/discharge device 94.

Here, prediction errors related to the amount of charge/discharge and the remaining power of the power storage system 93 and the EV charge/discharge device 94 will be described. The following eight parameters should be considered in the charge/discharge control of the power storage system 93 and the EV charge/discharge device 94.

(1) Maximum allowable modification of storage battery charge/discharge
(2) Minimum allowable modification of storage battery charge/discharge
(3) Maximum allowable modification of EV charge/discharge
(4) Minimum allowable modification of EV charge/discharge
(5) Maximum allowable modification of remaining storage battery power
(6) Minimum allowable modification of remaining storage battery power
(7) Maximum allowable modification of remaining EV power
(8) Minimum allowable modification of remaining EV power

(1) Maximum allowable modification of storage battery charge/discharge is a dischargeable amount (power) indicating how much more watts the power storage system 93 can be discharged at based on the current amount of charge/discharge, and (2) Minimum allowable modification of storage battery charge/discharge is a chargeable amount (power) indicating how much more watts the power storage system 93 can be charged at based on the current amount of charge/discharge. (3) Maximum allowable modification of EV charge/discharge is a dischargeable amount (power) indicating how much more watts the storage battery of the EV can be discharged at based on the current amount of charge/discharge, and (4) Minimum allowable modification of EV charge/discharge is a chargeable amount (power) indicating how much more watts the storage battery of the EV can be charged at based on the current amount of charge/discharge.

(5) Maximum allowable modification of remaining storage battery power is a dischargeable amount (power amount) indicating how much more watt-hours the power storage system 93 can be discharged at based on the current remaining power, and (6) Minimum allowable modification of remaining storage battery power is a chargeable amount (power amount) indicating how much more watt-hours the power storage system 93 can be charged at based on the current remaining power. (7) Maximum allowable modification of remaining EV power is a dischargeable amount (power amount) indicating how much more watt-hours the storage battery of the EV can be discharged at based on the current remaining power, and (8) Minimum allowable modification of remaining EV power is a chargeable amount (power amount) indicating how much more watt-hours the storage battery of the EV can be charged at based on the current remaining power. Note that the prediction values of (5) Maximum allowable modification of remaining storage battery power, (6) Minimum allowable modification of remaining storage battery power, (7) Maximum allowable modification of remaining EV power, and (8) Minimum allowable modification of remaining EV power are computed based on the prediction values of the corresponding remaining power and the minimum and maximum storage power determined in advance for the corresponding storage battery.

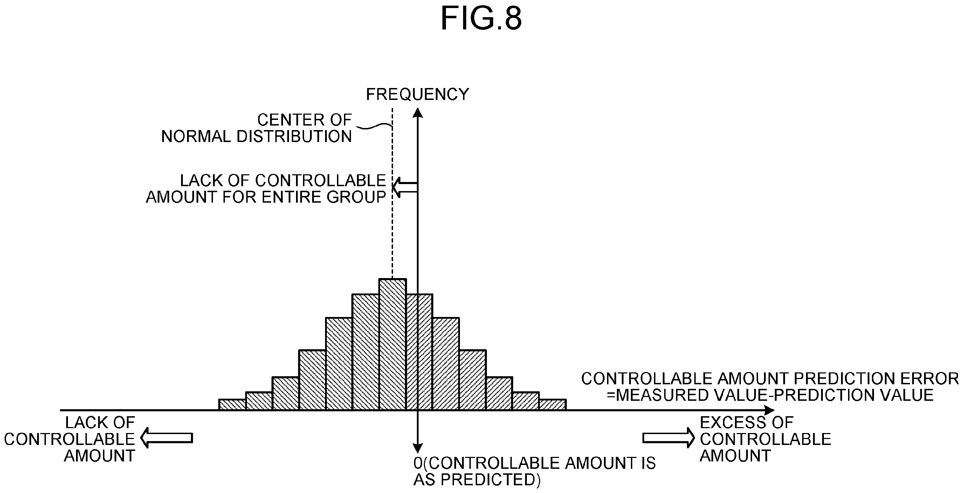

The prediction errors of these parameters are classified into errors appearing in the total of the entire group and errors that depend on the dispersion in the consumer 9 in the group. FIG. 8 is a diagram schematically illustrating the distribution of prediction errors of the controllable amount according to the present embodiment. The controllable amount is the chargeable amount (power), the dischargeable amount (power), the chargeable amount (power amount), and the dischargeable amount (power amount) related to the power storage system 93 and the storage battery of the EV described above. Note that the amount that can be controlled as the amount of control is the chargeable amount (power) and the dischargeable amount (power), but the control is restricted by the remaining level of the storage battery. Therefore, here, the chargeable amount (power amount) and the dischargeable amount (power amount) as the storage battery capacities are also referred to as the controllable amount. FIG. 8 illustrates prediction errors in each consumer 9 belonging to one group, that is, deviations between the actual controllable amount and the prediction value of the controllable amount. In FIG. 8, the horizontal axis represents the deviation of the controllable amount from the prediction value, and the vertical axis represents the frequency, that is, the number of consumers 9.

For example, consider an example in which the controllable amount is the above item (2) Minimum allowable modification of storage battery charge/discharge. The real value of the amount of charge/discharge of the power storage system 93 of each consumer 9 does not necessarily coincide with the prediction value, and generally has an error. Therefore, an error also occurs in (2) Minimum allowable modification of storage battery charge/discharge, which is a chargeable amount (power). The errors of the chargeable amount (power) are dispersed almost randomly, and thus close to the normal distribution as illustrated in FIG. 8. With the prediction errors of the chargeable amount (power) approximated by the normal distribution, the deviation from zero at the center of the normal distribution illustrated in FIG. 8 is a group-based prediction error, that is, an error appearing in the total of the entire group. On the other hand, the spread of prediction errors of each consumer 9 from the center of the normal distribution is the dispersion within the consumer 9 in the group.

In the present embodiment, for the error appearing in the total of the entire group, the control command generation unit 82 performs error prediction, subtracts the prediction error, which is the value of the predicted error, from the chargeable amount (power) to update the chargeable amount (power), and sets the updated chargeable amount (power) as the upper limit. Therefore, when the plan value of the amount of storage battery charge/discharge is a plan value of charge and the absolute value thereof exceeds the chargeable amount (power), the control command generation unit 82 changes the plan value such that the absolute value becomes the chargeable amount (power). The control command generation unit 82 computes the prediction error by obtaining the center value given the above normal distribution based on the result of applying the first-order lag filter to the actual error, i.e. the difference between the actual value and the prediction value, in each time slot and for each group. Since the normal distribution is given, the center of the normal distribution can be computed as the mean of the actual values of the prediction errors of the respective consumers 9. Alternatively, using the actual value in the same time slot as the current time slot, the value at the center of the normal distribution may be obtained by applying the first-order lag filter to the actual error, i.e. the difference between the actual value and the prediction value, for each group.

The control command generation unit 82 similarly obtains the prediction error for each of the above eight parameters other than (2) Minimum allowable modification of storage battery charge/discharge, updates each value using the prediction error, and sets the updated value as the upper limit value.

In this manner, the group-based plan values of the amount of storage battery charge/discharge and the amount of EV charge/discharge are updated. Note that depending on the prediction error, the plan values of the amount of storage battery charge/discharge and the amount of EV charge/discharge may remain unchanged, but such a case where the values are not actually changed is also referred to as update. Next, when the group-based amount of storage battery charge/discharge is the amount of charge, the control command generation unit 82 distributes the updated amount of storage battery charge/discharge to each consumer 9 through linear programming by using (2) Minimum allowable modification of storage battery charge/discharge and (6) Minimum allowable modification of remaining storage battery power as constraint conditions and using, as evaluation items, the unit price of storage battery charge control for each consumer 9 and the minimum allowable modification of remaining storage battery power computed from the actual value of the remaining storage battery power. When the group-based amount of storage battery charge/discharge is the amount of discharge, similarly, the control command generation unit 82 distributes the updated amount of storage battery discharge to each consumer 9 through linear programming by using (1) Maximum allowable modification of storage battery charge/discharge and (5) Maximum allowable modification of remaining storage battery power as constraint conditions and using, as evaluation items, the unit price of storage battery discharge control for each consumer 9 and the maximum allowable modification of remaining storage battery power computed from the actual value of the remaining storage battery power. The control command generation unit 82 determines the amount of storage battery charge/discharge distributed to each consumer 9 as a control command for each consumer 9. Note that the method for computing control commands described above is an example. As another example, when the amount of storage battery charge/discharge is the amount of discharge, the maximum allowable modification of storage battery charge/discharge of the power storage system 93 of each consumer 9 may be computed from the actual value of the amount of storage battery charge/discharge for the latest five minutes, and the plan value of the amount of charge/discharge may be allocated to each consumer 9 according to the ratio of the maximum allowable modification of storage battery charge/discharge for each consumer 9.

Returning to FIG. 7, after step S44, the command device 8 transmits the control command (step S45). Specifically, the control command generation unit 82 transmits the control command determined in step S44, which corresponds to each of the power storage system 93 and the EV charge/discharge device 94 of each consumer 9, to each consumer 9 via the communication unit 81.

Next, the command device 8 acquires actual values of the amount of charge/discharge, predicts the separation from the control command (step S46), determines an additional command based on the absolute value of the separation, and transmits the additional command (step S47). Specifically, for example, the additional command is determined in the following procedure.

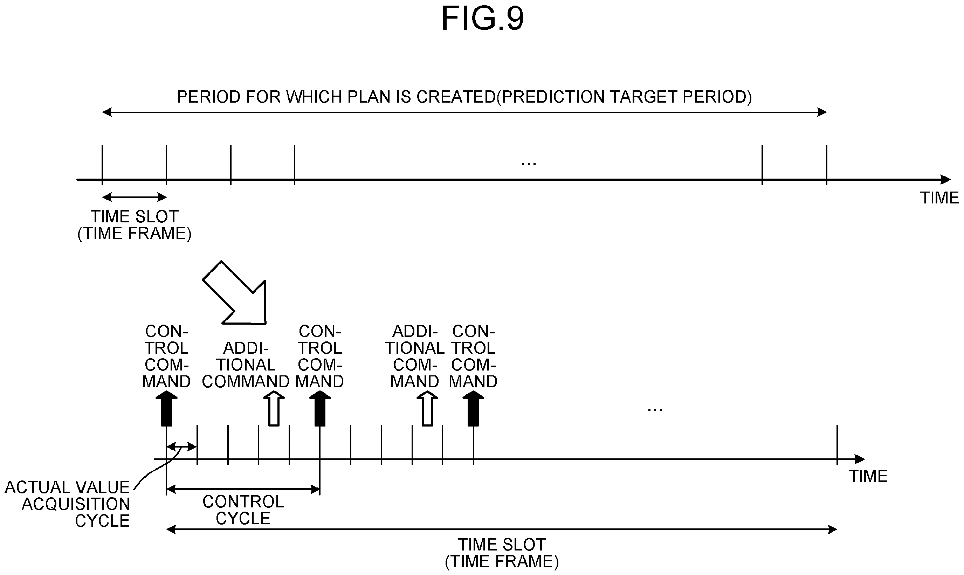

Here, first, a control cycle will be described. The control command described in steps S44 and S45 is transmitted from the command device 8 once per predetermined control cycle. FIG. 9 is a diagram schematically illustrating an exemplary control cycle according to the present embodiment. In FIG. 9, the prediction target period is illustrated in the upper part, and the prediction target period is divided into time slots as described above. Therefore, the plan values of the amount of storage battery charge/discharge and the amount of EV charge/discharge are also computed in each time slot. As illustrated in the lower part of FIG. 9, a control cycle is shorter than one time slot and longer than an actual value acquisition cycle, i.e. a cycle in which the command device 8 acquires each actual value in the terminal device 95 of each consumer 9. The actual value acquisition cycle is, for example, the same as the data collection cycle in which the data collection device 4 acquires information from the terminal device 95, but the actual value acquisition cycle and the data collection cycle may be different. For example, the command device 8 may acquire each actual value in the actual value acquisition cycle that is twice the data collection cycle.

As illustrated in the lower part of FIG. 9, a control command is transmitted to each consumer 9 in every control cycle. Note that the two types of control commands of the amount of storage battery charge/discharge and the amount of EV charge/discharge corresponding to the same consumer 9 may be simultaneously transmitted in the same cycle, or may be transmitted in different control cycles. The consumer 9 may have a plurality of power storage systems 93, in which case prediction is performed in steps S14 and S15 described above for each power storage system 93, and control and additional commands are generated for each power storage system 93 during the control.

An additional command is determined according to the separation between the transmitted control command and the actual value, that is, the difference between the control command and the actual value, in the control cycle in which the control command has been transmitted. For example, suppose that the control cycle is five minutes, and the actual value acquisition cycle is one minute. Here, it is assumed that after receiving a control command, the power storage system 93 and the EV charge/discharge device 94 in each consumer 9 quickly perform the charge/discharge control according to the control command when it is possible to follow the control command. Hereinafter, the control of the power storage system 93 will be described as an example, but additional commands may be similarly generated for the EV charge/discharge device 94. Alternatively, the additional command generation unit 83 may exclude the EV charge/discharge device 94 from the target for generation and transmission of additional commands, and transmit additional commands only to the power storage system 93.

Upon transmitting a control command, the control command generation unit 82 of the command device 8 notifies the additional command generation unit 83 of the control command, and the additional command generation unit 83 holds the control command. The additional command generation unit 83 computes the separation between the control command and the actual value, that is, the difference between the control command and the actual value, using the first actual value of the amount of storage battery charge/discharge acquired after the transmission of the control command and the control command, and holds the separation as a separation for each consumer 9. The additional command generation unit 83 holds the actual value of the amount of storage battery charge/discharge acquired after the transmission of the control command. Given that the actual value acquisition cycle is one minute, ideally, the additional command generation unit 83 receives the actual value of the amount of storage battery charge/discharge within one minute after the transmission of the control command. However, the terminal devices 95 of the respective consumers 9 are not necessarily synchronized, and there may be a delay due to the communication time and various processing times. Therefore, it may take up to more than two minutes after the transmission of the control command for the additional command generation unit 83 to acquire the actual value of the amount of storage battery charge/discharge after the transmission of the control command for all the consumers 9.

Next, for example, three minutes and thirty seconds after the transmission of the control command, the additional command generation unit 83 computes an integrated value for two minutes using two actual values acquired from each consumer 9, that is, actual values for two minutes, and multiplies the integrated value for two minutes by 2.5 to predict an integrated value at the transmission timing of the next control command, that is, five minutes after the transmission of the latest control command. The reason why this process is performed three minutes and thirty seconds after the transmission of the control command is that, since it takes up to more than two minutes to acquire the actual value of the amount of storage battery charge/discharge after the transmission of the control command as described above, it is considered that it takes more than three minutes to acquire the second actual value after the transmission of the control command. In addition, the additional command generation unit 83 computes an integrated value for five minutes of the group-based control commands, and computes the difference between the integrated value for five minutes of the control commands and the predicted integrated value as a separation from the control command. The additional command generation unit 83 aggregates the predicted integrated values by group. In addition, the additional command generation unit 83 computes an integrated value for five minutes of the group-based control commands, and computes the difference between the integrated value for five minutes of the control commands and the predicted integrated value as a separation of each group from the control command.

Next, in order to eliminate the separation of each group within the same control cycle, the additional command generation unit 83 computes an additional command for each consumer 9 so as to eliminate the separation in one minute within the range of the controllable amount of the power storage system 93 of each consumer 9 in the ascending order of the absolute value of the separation for each consumer 9. Then, the additional command generation unit 83 transmits the computed additional command to each consumer 9 via the communication unit 81. The additional command is transmitted, for example, before the lapse of four minutes after the transmission of the control command so that one minute corresponding to the additional command is performed within the same control cycle. That is, the processing from the computation of the separation of each group to the transmission of the additional command is performed between three minutes and thirty seconds and four minutes after the transmission of the control command. As described above, in the present embodiment, since additional commands for absorbing the separation of the group are assigned preferentially in the ascending order of the absolute value of the separation for each consumer 9, the consumers 9 having a high possibility of following control commands can be preferentially selected as additional command destinations, and the probability that the control is performed according to the additional commands can be increased.

Note that the numerical values such as three minutes and thirty seconds and one minute described above are examples. These numerical values only need to be set such that the separation between the control command and the actual value can be eliminated by the additional command within the same control cycle, and the specific numerical values are not limited to the above-described examples. In addition, the additional command only needs to be computed such that the separation between the control command and the actual value is eliminated within the control cycle, and the specific computation method is not limited to the above-described example. In the above example, the separation between the control command and the actual value is eliminated within one control cycle, but a plurality of control cycles may be set as the unit, and the additional command may be computed so as to eliminate the separation between the control command and the actual value within a plurality of control cycles.

Returning to FIG. 7, the control command generation unit 82 determines whether it is the next time frame, that is, the next time slot (step S48). That is, since plan values are generated in each time slot, that is, each time frame, the control command generation unit 82 determines whether it is the time corresponding to the next time frame in order to update the plan values to be used. In response to determining that it is the next time frame (Yes in step S48), the control command generation unit 82 repeats the processing from step S41. In response to determining that it is not the next time frame (No in step S48), the control command generation unit 82 determines whether it is the command generation timing for each control cycle (step S49). As described above, since a control command is generated in every control cycle, the control command generation unit 82 determines in step S49 whether the time corresponding to the control cycle has elapsed. In response to determining that it is the command generation timing for each control cycle (Yes in step S49), the control command generation unit 82 repeats the processing from step S42. In response to selecting No in step S49, the control command generation unit 82 repeats step S49.

Note that when the command quantity of a control command is zero, that is, when there is no request for control from the power grid, the control command may be transmitted to the consumer 9 with the command quantity set to zero, or the control command need not be transmitted to the consumer 9 in the corresponding control cycle. Similarly, when the command quantity of an additional command is zero, the additional command may be transmitted to the consumer 9 with the command quantity set to zero, or the additional command need not be transmitted to the consumer in the corresponding control cycle.

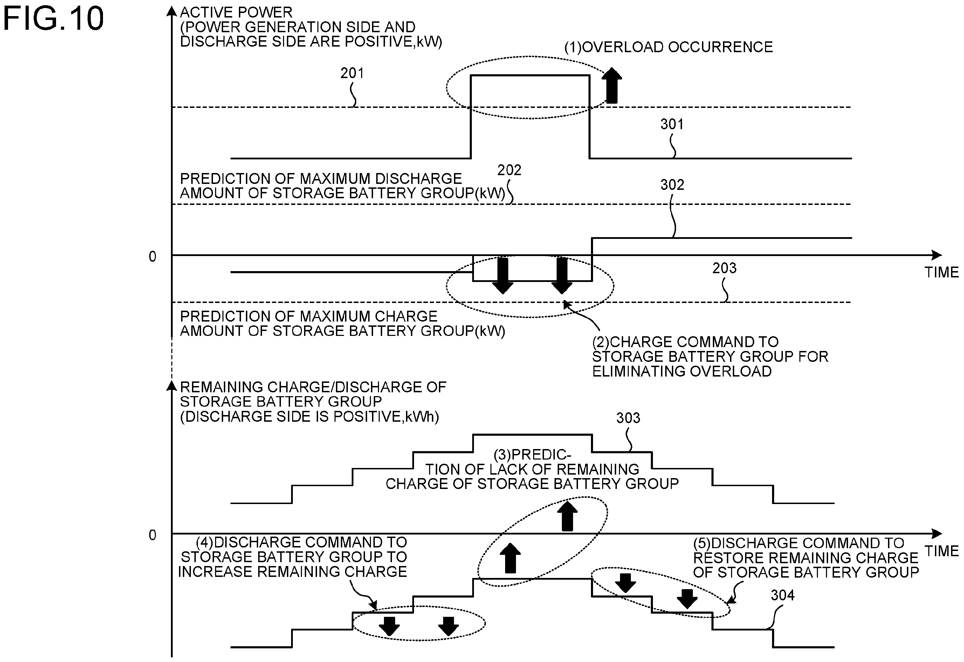

Next, the effects of the present embodiment will be described. FIG. 10 is a diagram for explaining the effects of the present embodiment. In FIG. 10, the horizontal axis represents time. The upper part of FIG. 10 indicates the active power, and the reverse flow power 301 is the reverse flow power in the section switch 3 of FIG. 1. The lower maximum reverse power flow 201 indicates the active power corresponding to the maximum allowable current allowed for the passage current of the section switch 3. The maximum discharge power 202 is the prediction value of the maximum discharge amount of the storage battery group of group #2 in FIG. 1, and the maximum charge power 203 is the prediction value of the maximum charge amount of the storage battery group of group #2 in FIG. 1. The lower part of FIG. 10 indicates the remaining charge/discharge of the storage battery group of group #2, the remaining discharge 303 indicates the prediction value of the remaining discharge of the storage battery group of group #2, and the remaining charge 304 indicates the prediction value of the remaining charge of the storage battery group of group #2.

As a result of the power flow calculation in step S21 in FIG. 5, if the overload, that is, the deviation of the passage current from the allowable value, is predicted to occur in the section switch 3, that is, if (1) overload occurrence in FIG. 10 is predicted, in order to eliminate the overload only in this time slot, (2) a charge command to the storage battery group for eliminating the overload in FIG. 10 is planned.

However, an attempt to give (2) a charge command to the storage battery group for eliminating the overload may result in (3) a prediction that the remaining charge of the storage battery group is insufficient as shown in the lower part of FIG. 10. In the present embodiment, since the remaining power is considered as a constraint condition at the time of creating the charge/discharge plan, the amount of charge/discharge is computed such that the remaining power does not exceed the upper limit. In addition, the amount of charge/discharge is computed using the sum of squares of the remaining power variation over all the time sections as an evaluation function. Therefore, it is planned to issue (4) a discharge command to the storage battery group to increase the remaining charge at a time before the time when the occurrence of overload is predicted. As a result, (2) a charge command to the storage battery group for eliminating the overload can be planned. In addition, since the sum of squares of the remaining power variation over all the time sections is used as an evaluation function, (5) a discharge command to restore the remaining charge of the storage battery group is given. As a result, the storage batteries of the consumers 9 can be used for securing the quality of the power grid with reduced influence on the storage batteries of the consumers 9.

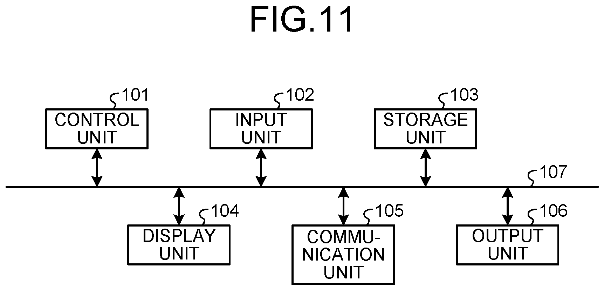

Next, an exemplary hardware configuration of each device constituting the power grid management system 11 according to the present embodiment, that is, the data collection device 4, the database device 5, the prediction device 6, the charge/discharge plan creation device 7, and the command device 8, will be described. FIG. 11 is a diagram illustrating an exemplary configuration of a computer system that implements each device constituting the power grid management system 11 according to the present embodiment.

As illustrated in FIG. 11, this computer system includes a control unit 101, an input unit 102, a storage unit 103, a display unit 104, a communication unit 105, and an output unit 106, which are connected to one another via a system bus 107. In FIG. 11, the control unit 101 is, for example, a central processing unit (CPU) or the like, and executes a program describing the processes in each device constituting the power grid management system 11 according to the present embodiment. The input unit 102 includes, for example, a keyboard, a mouse, and the like, and is used by the user of the computer system to input various types of information. The storage unit 103 includes various types of memories such as a random access memory (RAM) and a read only memory (ROM) and a storage device such as a hard disk. The storage unit 103 stores, for example, programs to be executed by the control unit 101 and necessary data obtained during processing. The storage unit 103 is also used as a temporary storage area for programs. The display unit 104 includes a liquid crystal display (LCD) panel or the like, and displays various screens to the user of the computer system. The communication unit 105 is a receiver and a transmitter that perform communication processing. The output unit 106 is a printer or the like.

Here, an example of the operation of the computer system that is performed until the program for implementing each device constituting the power grid management system 11 according to the present embodiment becomes executable will be described. In the computer system having the above-mentioned configuration, for example, the program is installed on the storage unit 103 from a compact disc (CD)-ROM or digital versatile disc (DVD)-ROM set in a CD-ROM drive or DVD-ROM drive (not illustrated). Then, when the program is executed, the program read from the storage unit 103 is stored in the storage unit 103. In this state, the control unit 101 executes the processes as each device constituting the power grid management system 11 of the present embodiment in accordance with the program stored in the storage unit 103.

In the above description, the program describing the processes is provided using a CD-ROM or DVD-ROM as a recording medium. Alternatively, the program may be provided by a transmission medium such as the Internet via the communication unit 105 according to the configuration of the computer system, the capacity of the program, and the like.

The communication units 41, 51, 61, 71, and 81 illustrated in FIG. 2 are implemented by, for example, the communication unit 105 illustrated in FIG. 11. The collection control unit 42, the management unit 52, the prediction processing unit 62, the group aggregation unit 63, the power flow calculation unit 72, the constraint condition determination unit 73, the plan value computation unit 74, the control command generation unit 82, and the additional command generation unit 83 illustrated in FIG. 2 are implemented by the control unit 101 executing the program. The storage unit 103 is also used to implement these functions. The facility information storage unit 53, the contract information storage unit 54, the collected data storage unit 55, and the processing data storage unit 56 illustrated in FIG. 2 are implemented by the storage unit 103 illustrated in FIG. 11. Note that FIG. 11 is an example, and the configuration of the computer system is not limited to the example illustrated in FIG. 11. For example, the output unit 106 need not be provided in the computer system.

In addition, each device constituting the power grid management system 11 according to the present embodiment may be implemented by one computer system or may be implemented by a plurality of computer systems. For example, each device constituting the power grid management system 11 may be implemented by a cloud system. In addition, two or more of the devices constituting the power grid management system 11 may be implemented by one computer system.

A charge/discharge plan creation program according to the present embodiment causes, for example, a computer system to execute a step of determining a constraint condition related to an amount of control of charge/discharge of a plurality of storage batteries connected to a power grid for securing quality of the power grid by using a prediction value of an amount of charge/discharge of the plurality of storage batteries computed based on an actual value of charge/discharge of the plurality of storage batteries. Further, the charge/discharge plan creation program according to the present embodiment causes, for example, a computer system to execute a step of computing a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

The terminal device 95 includes, for example, at least the control unit 101, the storage unit 103, and the communication unit 105 in the exemplary configuration illustrated in FIG. 11. The function of the terminal device 95 is implemented by the control unit 101 executing a program for implementing the operation as the terminal device 95 stored in the storage unit 103.

As described above, in the present embodiment, the power grid management system 11 uses prediction values based on the actual values of charge/discharge collected from the terminal devices 95 to generate plan values of the amount of charge so as to reduce the variation of the remaining power of the storage batteries of the consumers 9 in each time section within a certain period. Therefore, it is possible to create a charge/discharge plan that reflects the usage status of the storage batteries of the consumers 9 and reduces the influence on the remaining power of the storage battery of each consumer 9, and thus, it is not necessary to preliminarily place a fixed constraint on the remaining power of the storage battery of each consumer 9. Accordingly, storage batteries can be used for securing the quality of the power grid while preventing deterioration of usability of storage batteries for the consumers 9.

The configurations described in the above-mentioned embodiments indicate examples. The embodiments can be combined with another well-known technique and with each other, and some of the configurations can be omitted or changed in a range not departing from the gist.

Reference Signs List

1 distribution line; 2 distribution transformer; 3 section switch; 4 data collection device; 5 database device; 6 prediction device; 7 charge/discharge plan creation device; 8 command device; 9-1 to 9-6 consumer; 11 power grid management system; 20 external information providing device; 41, 51, 61, 71, 81 communication unit; 42 collection control unit; 52 management unit; 53 facility information storage unit; 54 contract information storage unit; 55 collected data storage unit; 56 processing data storage unit; 62 prediction processing unit; 63 group aggregation unit; 72 power flow calculation unit; 73 constraint condition determination unit; 74 plan value computation unit; 82 control command generation unit; 83 additional command generation unit; 91 smart meter; 92 photovoltaic facility; 93 power storage system; 94 EV charge/discharge device; 95 terminal device.

**Claims**

1. A charge/discharge plan creation device comprising:

   a constraint condition determination unit to determine a constraint condition related to an amount of control of charge/discharge of a plurality of storage batteries connected to a power grid for securing quality of the power grid by using a prediction value of an amount of charge/discharge of the plurality of storage batteries computed based on an actual value of charge/discharge of the plurality of storage batteries; and
   a plan value computation unit to compute a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

2. The charge/discharge plan creation device according to claim 1, wherein

   the plurality of storage batteries are used by consumers corresponding to the storage batteries,
   the plurality of storage batteries are grouped into groups including two or more of the consumers,
   the constraint condition determination unit determines the constraint condition for each of the groups using the prediction value aggregated for each of the groups, and
the plan value computation unit computes, as the plan value for each of the groups, a sum of amounts of control for the storage batteries belonging to the group.

3. The charge/discharge plan creation device according to claim 2, wherein the plan value computation unit computes the plan value through quadratic programming using, as an evaluation function, a sum of squares of the variation of each of the groups in a period for which the plan value is to be computed.

4. The charge/discharge plan creation device according to claim 2 or 3, comprising

a power flow calculation unit to perform power flow calculation using a result of aggregation of the prediction value for each of the groups and prediction values of power consumption and power generation for each of the groups, wherein
when an overload is predicted to occur in the power grid as a result of the power flow calculation, the constraint condition determination unit changes the constraint condition related to the amount of charge/discharge for each of the groups such that the overload is eliminated.

5. The charge/discharge plan creation device according to any one of claims 1 to 4, wherein the plurality of storage batteries include a storage battery in a stationary power storage system installed in a consumer.

6. The charge/discharge plan creation device according to claim 5, wherein

the actual value includes an actual value of the amount of charge/discharge of the plurality of storage batteries and an actual value of the remaining power of the plurality of storage batteries, and
the charge/discharge plan creation device includes:
a prediction processing unit to hold storage battery correlation information indicating a relationship between a difference between power consumption and power generation in the consumers corresponding to the storage batteries and an amount of charge/discharge of the storage batteries in the consumers, and compute the prediction value of the amount of charge/discharge of the storage batteries using the storage battery correlation information, a prediction value of power consumption in the consumers, and a prediction value of power generation in the consumers.

7. The charge/discharge plan creation device according to any one of claims 1 to 5, wherein the plurality of storage batteries include a storage battery mounted on an electric vehicle.

8. A command device comprising:

a control command generation unit to generate a control command for charge/discharge of each of a plurality of storage batteries connected to a power grid by using: a plan value that is a sum of amounts of control of charge/discharge of the plurality of storage batteries for each group including the plurality of storage batteries, the plan value being computed by the charge/discharge plan creation device according to any one of claims 2 to 4; and an actual value of an amount of charge/discharge of the storage batteries transmitted from each of the plurality of storage batteries; and
a communication unit to transmit the control command to a charge/discharge device that charges and discharges the storage batteries.

9. The command device according to claim 8, wherein

the control command generation unit generates the control command in every control cycle,
the command device includes
an additional command generation unit to generate an additional command within the control cycle corresponding to the control command by using a difference between the control command and an actual value of the amount of charge/discharge of the storage batteries transmitted from each of the plurality of storage batteries after transmission of the control command, and
the communication unit transmits the additional command to the charge/discharge device corresponding to the additional command.

10. A power grid management system comprising:

the charge/discharge plan creation device according to any one of claims 1 to 4; and
a command device to use a plan value of an amount of control of charge/discharge of a storage battery computed by the charge/discharge plan creation device to perform transmission to a charge/discharge device that charges and discharges the storage battery based on a control command for charge/discharge of the storage battery.

11. A power grid management system comprising:

a data collection device to collect an actual value of charge/discharge of a plurality of storage batteries connected to a power grid; and
a charge/discharge plan creation device to compute a plan value of an amount of control of charge/discharge of the plurality of storage batteries using the actual value, wherein
the charge/discharge plan creation device includes:

a constraint condition determination unit to determine a constraint condition related to the amount of control of charge/discharge of the plurality of storage batteries for securing quality of the power grid by using a prediction value of an amount of charge/discharge of the plurality of storage batteries computed based on the actual value; and
a plan value computation unit to compute the plan value by using the constraint condition and a variation of a remaining power of at least a part of the plurality of storage batteries generated by controlling charge/discharge of at least a part of the plurality of storage batteries for securing the quality of the power grid.

12. A terminal device to transmit, to a power grid management system, an actual value of charge/discharge of at least one of a plurality of storage batteries connected to a power grid, the power grid management system being configured to: determine a constraint condition related to an amount of control of charge/discharge of the plurality of storage batteries for securing quality of the power grid by using a prediction value of an amount of charge/discharge of the plurality of storage batteries computed based on the actual value of charge/discharge of the plurality of storage batteries; and compute a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

13. A power storage system comprising one of a plurality of storage batteries connected to a power grid, the power storage system being configured to:
receive, from a power grid management system, a control command for charge/discharge of the storage batteries, the control command corresponding to the power storage system; and charge and discharge the storage batteries based on the control command received, the power grid management system being configured to: determine a constraint condition related to an amount of control of charge/discharge of the plurality of storage batteries for securing quality of the power grid by using a prediction value of an amount of charge/discharge of the plurality of storage batteries computed based on an actual value of charge/discharge; compute a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid; and transmit the control command for charge/discharge of the storage batteries using the plan value.

14. A charge/discharge system comprising:

a plurality of storage batteries connected to a power grid; and
a charge/discharge plan creation device to: determine a constraint condition related to an amount of control of charge/discharge of the plurality of storage batteries for securing quality of the power grid by using a prediction value of an amount of charge/discharge of the plurality of storage batteries computed based on an actual value of charge/discharge of the plurality of storage batteries; and compute a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

15. A storage battery that is one of a plurality of storage batteries connected to a power grid, wherein
the storage battery is charged and discharged based on a control command transmitted from the power grid management system according to claim 10.

16. An electric vehicle on which the storage battery according to claim 15 is mounted.

17. A charge/discharge plan creation method for a charge/discharge plan creation device, the charge/discharge plan creation method comprising:

a step of determining a constraint condition related to an amount of control of charge/discharge of a plurality of storage batteries connected to a power grid for securing quality of the power grid by using a prediction value of an amount of charge/discharge of the plurality of storage batteries computed based on an actual value of charge/discharge of the plurality of storage batteries; and

a step of computing a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

18. A charge/discharge plan creation program for causing a computer to execute:

a step of determining a constraint condition related to an amount of control of charge/discharge of a plurality of storage batteries connected to a power grid for securing quality of the power grid by using a prediction value of an amount of charge/discharge of the plurality of storage batteries computed based on an actual value of charge/discharge of the plurality of storage batteries; and

a step of computing a plan value of an amount of control for the plurality of storage batteries by using the constraint condition and a variation of a remaining power of at least a part of the plurality of storage batteries generated by controlling charge/discharge of at least a part of the plurality of storage batteries for securing the quality of the power grid.

FIG.1

# FIG.2

TERMINAL DEVICE — 95

COMMUNICATION NETWORK — 10

**DATA COLLECTION DEVICE** — 4
- COMMUNICATION UNIT — 41
- COLLECTION CONTROL UNIT — 42

**PREDICTION DEVICE** — 6
- COMMUNICATION UNIT — 61
- PREDICTION PROCESSING UNIT — 62
- GROUP AGGREGATION UNIT — 63

EXTERNAL INFORMATION PROVIDING DEVICE — 20

**CHARGE/DISCHARGE PLAN CREATION DEVICE** — 7
- COMMUNICATION UNIT — 71
- POWER FLOW CALCULATION UNIT — 72
- CONSTRAINT CONDITION DETERMINATION UNIT — 73
- PLAN VALUE COMPUTATION UNIT — 74

**DATABASE DEVICE** — 5
- COMMUNICATION UNIT — 51
- MANAGEMENT UNIT — 52
- FACILITY INFORMATION STORAGE UNIT — 53
- CONTRACT INFORMATION STORAGE UNIT — 54
- COLLECTED DATA STORAGE UNIT — 55
- PROCESSING DATA STORAGE UNIT — 56

**COMMAND DEVICE** — 8
- COMMUNICATION UNIT — 81
- CONTROL COMMAND GENERATION UNIT — 82
- ADDITIONAL COMMAND GENERATION UNIT — 83

EP 4 287 442 A1

# FIG.3

START

PREDICTION PROCESSING — S1

DETERMINE CONSTRAINT CONDITIONS FOR SECURING POWER GRID QUALITY — S2

DETERMINE CHARGE/ DISCHARGE MODIFICATION (CREATE CHARGE/DISCHARGE PLAN) — S3

REDETERMINE CHARGE/ DISCHARGE MODIFICATION (CREATE CHARGE/DISCHARGE PLAN) — S4

CHARGE/DISCHARGE CONTROL — S5

END

# FIG.4

```
                    ┌─────────────┐
                    │    START    │
                    └─────────────┘
                           │
                           ▼
        ┌──────────────────────────────────┐
        │       PREDICT ACTUAL LOAD         │─── S11
        └──────────────────────────────────┘
                           │
                           ▼
        ┌──────────────────────────────────┐
        │         PREDICT AMOUNT OF         │
        │      PHOTOVOLTAIC GENERATION      │─── S12
        └──────────────────────────────────┘
                           │
                           ▼
        ┌──────────────────────────────────┐
        │     PREDICT AMOUNT OF EV CHARGE/  │
        │  DISCHARGE AND REMAINING EV POWER │─── S13
        └──────────────────────────────────┘
                           │
                           ▼
        ┌──────────────────────────────────┐
        │  PREDICT AMOUNT OF STORAGE BATTERY│
        │ CHARGE/DISCHARGE OF POWER STORAGE │─── S14
        │              SYSTEM               │
        └──────────────────────────────────┘
                           │
                           ▼
        ┌──────────────────────────────────┐
        │  PREDICT REMAINING STORAGE BATTERY│
        │              POWER                │─── S15
        └──────────────────────────────────┘
                           │
                           ▼
        ┌──────────────────────────────────┐
        │    PREDICT CONTROLLABLE AMOUNT    │─── S16
        └──────────────────────────────────┘
                           │
                           ▼
        ┌──────────────────────────────────┐
        │  COMPUTE GROUP-BASED PREDICTION   │
        │              VALUES               │─── S17
        └──────────────────────────────────┘
                           │
                           ▼
                    ┌─────────────┐
                    │     END     │
                    └─────────────┘
```

# FIG.5

```
( START )
     │
     ▼
┌─────────────────────────────────────────┐
│ POWER FLOW CALCULATION USING PREDICTION  │──  S21
│        VALUES FOR EACH GROUP             │
└─────────────────────────────────────────┘
     │
     ▼
         DOES                          ⟋ S22
NO    PASSAGE CURRENT OF
◄── EACH FACILITY OF DISTRIBUTION SYSTEM
      DEVIATE FROM ALLOWABLE
             VALUE?
     │ YES
     ▼
┌─────────────────────────────────────────┐
│         COMPUTE, FOR EACH GROUP,         │
│    CURRENT CONTROL AMOUNT SENSITIVITY    │
│  INDICATING INFLUENCE OF EACH OF CHANGES IN │── S23
│     AMOUNT OF STORAGE BATTERY CHARGE/    │
│     DISCHARGE AND AMOUNT OF EV CHARGE/   │
│ DISCHARGE ON VARIATION IN PASSAGE CURRENT OF │
│    EACH FACILITY OF DISTRIBUTION SYSTEM  │
└─────────────────────────────────────────┘
     │
     ▼
┌─────────────────────────────────────────┐
│       SET STORAGE BATTERY CHARGE/        │
│  DISCHARGE MODIFICATION AND EV CHARGE/   │── S24
│        DISCHARGE MODIFICATION FOR        │
│     EACH GROUP AS CONTROL VARIABLES      │
└─────────────────────────────────────────┘
     │
     ▼
┌─────────────────────────────────────────┐
│     SET MAXIMUM ALLOWABLE CURRENT OF     │
│  EACH FACILITY OF DISTRIBUTION SYSTEM AND │
│     MAXIMUM ALLOWABLE MODIFICATION OF    │
│    STORAGE BATTERY CHARGE/DISCHARGE,     │
│     MINIMUM ALLOWABLE MODIFICATION OF    │── S25
│    STORAGE BATTERY CHARGE/DISCHARGE,     │
│     MAXIMUM ALLOWABLE MODIFICATION OF    │
│ EV CHARGE/DISCHARGE, AND MINIMUM ALLOWABLE │
│  MODIFICATION OF EV CHARGE/DISCHARGE FOR │
│   EACH GROUP AS CONSTRAINT CONDITIONS    │
└─────────────────────────────────────────┘
     │
     ▼
┌─────────────────────────────────────────┐
│     COMPUTE STORAGE BATTERY CHARGE/      │
│  DISCHARGE MODIFICATION AND EV CHARGE/   │
│  DISCHARGE MODIFICATION FOR EACH GROUP   │── S26
│ THROUGH QUADRATIC PROGRAMMING USING SUM  │
│    OF SQUARES OF AMOUNT OF CONTROL AS    │
│           EVALUATION FUNCTION            │
└─────────────────────────────────────────┘
     │
     ▼
┌─────────────────────────────────────────┐
│   DETERMINE CONSTRAINT CONDITIONS FOR    │── S27
│ COMPUTING PLAN VALUES OF AMOUNT OF CONTROL │
└─────────────────────────────────────────┘
     │
     ▼
  ( END )
```

# FIG.6

START

SET CONSTRAINT CONDITIONS DETERMINED FROM REQUEST TO SECURE POWER GRID QUALITY — S31

SET CONSTRAINT CONDITIONS ON REMAINING POWER — S32

SET STORAGE BATTERY CHARGE/DISCHARGE MODIFICATION AND EV CHARGE/DISCHARGE MODIFICATION AS CONTROL VARIABLES — S33

SET, AS EQUALITY CONSTRAINT CONDITIONS, REMAINING STORAGE BATTERY POWER ADDED TO SUBSEQUENT TIME DUE TO CHANGE OF AMOUNT OF STORAGE BATTERY CHARGE/ DISCHARGE AND REMAINING EV POWER ADDED TO SUBSEQUENT TIME DUE TO CHANGE OF AMOUNT OF EV CHARGE/ DISCHARGE — S34

SET SUM OF SQUARES OF REMAINING POWER VARIATION OVER ALL TIME SECTIONS OF PREDICTION TARGET PERIOD AS EVALUATION FUNCTION — S35

COMPUTE STORAGE BATTERY CHARGE/ DISCHARGE MODIFICATION AND EV CHARGE/DISCHARGE MODIFICATION FOR EACH GROUP IN EACH TIME SECTION THROUGH QUADRATIC PROGRAMMING (CREATE CHARGE/DISCHARGE PLAN) — S36

END

EP 4 287 442 A1

# FIG.7

START

COMPUTE GROUP-BASED PREDICTION VALUES OF LOAD USING EACH PREDICTION VALUE COMPUTED IN PREDICTION PROCESSING — S41

COMPUTE GROUP-BASED ACTUAL VALUES OF LOAD — S42

CORRECT, FOR EACH GROUP, PLAN VALUES OF CHARGE/DISCHARGE MODIFICATION USING DIFFERENCE BETWEEN PREDICTION VALUE AND ACTUAL VALUE OF LOAD — S43

DETERMINE CONTROL COMMAND FOR CHARGE/ DISCHARGE OF EACH CONSUMER USING CORRECTED CHARGE/DISCHARGE MODIFICATION AND ACTUAL VALUES OF AMOUNT OF CHARGE/ DISCHARGE — S44

TRANSMIT CONTROL COMMAND — S45

ACQUIRE ACTUAL VALUES OF AMOUNT OF CHARGE/ DISCHARGE AND PREDICT SEPARATION FROM CONTROL COMMAND — S46

DETERMINE ADDITIONAL COMMAND BASED ON ABSOLUTE VALUE OF SEPARATION — S47

NEXT TIME FRAME? — S48
YES
NO

COMMAND GENERATION TIMING FOR EACH CONTROL CYCLE? — S49
NO
YES

# FIG.8

FREQUENCY

CENTER OF
NORMAL DISTRIBUTION

LACK OF CONTROLLABLE
AMOUNT FOR ENTIRE GROUP

CONTROLLABLE AMOUNT PREDICTION ERROR
=MEASURED VALUE-PREDICTION VALUE

LACK OF
CONTROLLABLE
AMOUNT

EXCESS OF
CONTROLLABLE
AMOUNT

0(CONTROLLABLE AMOUNT IS
AS PREDICTED)

EP 4 287 442 A1

# FIG.9

PERIOD FOR WHICH PLAN IS CREATED(PREDICTION TARGET PERIOD)

TIME

TIME SLOT
(TIME FRAME)

CON-TROL COM-MAND

ADDI-TIONAL COMMAND

CON-TROL COM-MAND

ADDI-TIONAL COM-MAND

CON-TROL COM-MAND

TIME

ACTUAL VALUE ACQUISITION CYCLE

CONTROL CYCLE

TIME SLOT
(TIME FRAME)

EP 4 287 442 A1

FIG.10

ACTIVE POWER
(POWER GENERATION SIDE AND DISCHARGE SIDE ARE POSITIVE,kW)

(1)OVERLOAD OCCURRENCE

201

301

302

203

TIME

(2)CHARGE COMMAND TO STORAGE BATTERY GROUP FOR ELIMINATING OVERLOAD

PREDICTION OF MAXIMUM DISCHARGE AMOUNT OF STORAGE BATTERY GROUP(kW)

202

PREDICTION OF MAXIMUM CHARGE AMOUNT OF STORAGE BATTERY GROUP(kW)

REMAINING CHARGE/DISCHARGE OF STORAGE BATTERY GROUP (DISCHARGE SIDE IS POSITIVE,kWh)

303

(3)PREDICTION OF LACK OF REMAINING CHARGE OF STORAGE BATTERY GROUP

(4)DISCHARGE COMMAND TO STORAGE BATTERY GROUP TO INCREASE REMAINING CHARGE

304

(5)DISCHARGE COMMAND TO RESTORE REMAINING CHARGE OF STORAGE BATTERY GROUP

TIME

# FIG.11

## INTERNATIONAL SEARCH REPORT

| International application No. |
|---|
| PCT/JP2021/003385 |

**A. CLASSIFICATION OF SUBJECT MATTER**
H02J 7/00(2006.01)i; H02J 3/00(2006.01)i; H02J 3/38(2006.01)i
FI: H02J3/00 170; H02J7/00 B; H02J3/38 110

According to International Patent Classification (IPC) or to both national classification and IPC

**B. FIELDS SEARCHED**

Minimum documentation searched (classification system followed by classification symbols)
H02J7/00; H02J3/00; H02J3/38

Documentation searched other than minimum documentation to the extent that such documents are included in the fields searched
Published examined utility model applications of Japan            1922–1996
Published unexamined utility model applications of Japan        1971–2021
Registered utility model specifications of Japan                     1996–2021
Published registered utility model applications of Japan          1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-195166 A (HITACHI POWER SOLUTIONS CO., LTD.) 03 December 2020 (2020-12-03) entire text, all drawings | 1–18 |
| A | JP 2018-148679 A (HITACHI, LTD.) 20 September 2018 (2018-09-20) entire text, all drawings | 1–18 |
| A | JP 2015-220862 A (TOYOTA MOTOR CORP.) 07 December 2015 (2015-12-07) entire text, all drawings | 1–18 |
| A | JP 2012-60835 A (THE KANSAI ELECTRIC POWER COMPANY, INCORPORATED) 22 March 2012 (2012-03-22) entire text, all drawings | 1–18 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 April 2021 (08.04.2021) | 20 April 2021 (20.04.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT
Information on patent family members

| International application No. |
| --- |
| PCT/JP2021/003385 |

| Patent Documents referred in the Report | Publication Date | Patent Family | Publication Date |
| --- | --- | --- | --- |
| JP 2020-195166 A | 03 Dec. 2020 | (Family: none) | |
| JP 2018-148679 A | 20 Sep. 2018 | US 2020/0006954 A1 entire text, all drawings WO 2018/159720 A1 EP 3591783 A1 | |
| JP 2015-220862 A | 07 Dec. 2015 | (Family: none) | |
| JP 2012-60835 A | 22 Mar. 2012 | (Family: none) | |

Form PCT/ISA/210 (patent family annex) (January 2015)

**EP 4 287 442 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020089087 A